# EUROPEAN PATENT APPLICATION

(11) **EP 1 712 522 A1**
(43) Date of publication of application: **18.10.2006**
(21) Application number: 05008172.8
(22) Date of filing: 14.04.2005
(51) Int. Cl.: C01B 31/02, D01F 9/127, B01J 21/18

(54) **Nanosized carbon material-activated carbon composite**

(71) Applicant: Schlögl, Robert, Prof. Dr., 14195 Berlin (DE); Sharifah Bee Binti O A Abd Hamid, Prof. Dr., 47810 Petaling Jaya Selangor (MY)
(72) Inventor: Schlögl, Robert, Prof. Dr., 14195 Berlin (DE); Sharifah Bee Binti O A Abd Hamid, Prof. Dr., 47810 Petaling Jaya Selangor (MY)
(74) Representative: HOFFMANN EITLE

(57) **Abstract**

The present invention relates to carbon-carbon composite material comprising a carbonaceous carrier and nanosize carbon structures (e.g. CNT or CNF), wherein the nanosize carbon structures are grown on the carbonaceous carrier. The carrier may be porous, as in activated carbon or consists of carbon black particles. In accordance with the invention, nanocarbon growth in the pores of porous carriers can be realized.

The process for the manufacture of a this carbon-carbon-composite material comprises the steps of treating a carbonaceous carrier material with a metal-containing catalyst material, said metal being capable of forming nanosize carbon structures, and growing nanosize carbon structures by means of a CVD (chemical vapour deposition) method on the treated carrier in a gas atmosphere comprising a carbon-containing gas, followed by an optional surface modification step. This process allows optimising porosity, hydrodynamical properties and surface chemistry independently from each other, which is particularly beneficial in respect of the use of the composite for water purification. Carbon black-based composites are particularly useful for filler applications.

## Description

The present invention relates to a carbon composite activated by immobilized nanocarbon, and more specifically to a carbon-carbon composite material comprising nanosize carbon structures grown on a carbonaceous carrier.

### TECHNICAL BACKGROUND

Based on the fast growing knowledge about the physical and chemical properties, nanosize carbon structures such as carbon nanotubes or nanofibers (CNTs or CNFs) are studied in a wide range of potential industrial applications including field effect transistors, one-dimensional quantum wires, field emitters and for hydrogen storage. Recently it has been found that nanosized carbon structures (in the following referred to as "nanocarbon") may also be catalytically active as such (CARBON NANOFILAMENTE IN DER HETEROGENEN KATALYSE: EINE TECHNISCHE ANWENDUNG FÜR KOHLENSTOFFMATERIALIEN? G. Mestl, N.I. Maximova, N. Keller, V.V. Roddatis, and R. Schlögl, Angew. Chem., 113, 2122-2125 (2001); "CATALYTIC ACTIVITY OF CARBON NANOTUBES AND OTHER CARBON MATERIALS FOR OXIDATIVE DEHYDROGENATION OF ETHYLBENZENE TO STYRENE". N. Maksimova, G. Mestl, and R. Schlögl, in Reaction Kinetics and the Development and Operation of Catalytic Processes, Studies in Surface Science and Catalysis, Vol. 133, p. 383-390, 2001.; "OXIDATIVE DEHYDROGENATION OF ETHYLBENZENE TO STYRENE OVER CARBONACEOUS MATERIALS. "N.I. Maximova, V.V. Roddatis, G. Mestl, M. Ledoux, and R. Schlögl, Eurasian Chem. Tech. J., 2, 231-236 (2000); and "THE FIRST CATALYTIC USE OF ONION-LIKE CARBON MATERIALS: THE STYRENE SYNTESIS." N. Keller, N.I. Maksimova, V.V. Roddatis, M. Schur, G. Mestl, Y.V. Butenko, V.L. Kuzentsov and R. Schlögl, Angew. Chem., 114, 1962-1966 (2002)).

Most applications of CNT/CNF either use individual tubes or fibers as in nanoelectronics or embed the fibers into a host matrix. For applications in chemistry, there is a huge potential by tailoring the outer surface chemistry of CNT/CNF between metallic (graphene layer parallel to the tube/fiber axis) and acidic-basic (all prism faces exposed along the fiber axis and saturated by hydroxyl groups) (R. Schlögl, in Handbook of porous solids (Editors: F. Schüth), pages 1863 to 1900, WILEY-VCH Verlag, Weinheim, 2002; H.-P. Boehm, Angew. Chem. 1966, 78 (12), 617)). These applications require however the availability of large amounts of material with well-defined surface chemical properties. To preserve the tailoring over long time of operation it is also necessary to observe the mechanical properties of the nanocarbon as high strength is only given in directions parallel to the graphene layers. For some applications, e.g. as catalyst, the nanocarbon must be formed into large objects to optimise the hydrodynamic properties allowing an effective contact with reacting media. Loose CNT/CNFs are unsuitable as they cannot be controlled in their suprastructural properties and operations of compaction can destroy or at least inhibit the access of the reactant medium to the nanostructures. Moreover, the difficult handling (dusting, etc.) of loose CNT/CNFs and their cost presently hamper large scale applications.

A hierarchical organisation of the nanocarbon on a robust carrier structure in larger dimensions is therefore highly desirable.

Moreover, it is known that activated carbon can be used as decolorant, taste-, and odour-removing agent and purification agent in food processing. The primary use for activated carbon is however the treatment of water, including potable water, waste water and ground water remediation which accounts for approximately half of all the use in the US. Activated carbon can be produced from a number of agricultural commodities, including hardwoods, grain hulls, corn cobs and nutshells, e.g. pecan shells. This leads to a wide spectrum of pores in various states and dimensions, which may differ by several orders of magnitude. This structural lack of homogeneity prevents the optimisation of adsorption efficiency with given hydrodynamical conditions. Further, in view of the desired efficiency and hydrodynamic properties, it can be disadvantageous that a major proportion of the pores in commercially available activated carbon is not interconnected. Moreover, commercially available activated carbon often shows little effect in removing some metal species such as condensable metal polyacids (e.g. antimonates, aurates, iron polyanions, molybdic acids). The origin of these deficiencies lies in the necessity to use oxidative treatments for the manufacture of activated carbon that automatically determine the surface chemical properties which can only poorly be modified in post-synthetic treatments.

Moreover, it is known to use conventional carbon black, as is produced from incomplete combustion of hydrocarbons, in large quantities as filler in polymers such as rubber for car tyres or in thermosetting resins for heat-conducting packaging cases for integrated circuits. A critical property of the resulting polymer composition is the fraction of filler needed. This is dictated by the "percolation" property of the filler. This property describes the minimal amount of filler needed to create a continuous network of filler particles within the polymer matrix. In conventional carbon fillers with spherical carbon particles a large volume fraction of up to 50% wt is needed and the particle interaction is given by dispersive forces between nanosized isotropic particles resulting in weak and easily interrupted contacts. Normal loose nanocarbons are better in the sense that they are anisotropic and require much less filling for percolation. They also provide long stretches of the network with strong covalent bonding along the fiber axis of the carbons.

However, they are very difficult to formulate into polymers due to their inherent tendency to agglomerate in strands of parallel nanocarbon bundles. Therefore, a demand exists for suitable polymer fillers showing a lower percolation limit, but at the same time at least a comparable performance than existing fillers in terms of mechanical properties and electrical and heat conductivity.

Thus, it is one object of the present invention to provide nanocarbon in an immobilized form showing mechanical and chemical stability.

It is one further object of the present invention to provide immobilized nanocarbon at low costs with optimal utilization of its properties according to the "just where it is needed" principle.

The present invention also aims at providing a process for the manufacture of such immobilized nanocarbon materials.

It is one further object of the present invention to provide a process allowing for tailoring size, porosity, hydrodynamical and surface chemical properties of this nanocarbon material independently from each other.

According to one embodiment, it is one further object of the present invention to provide the nanocarbon in the form of comparatively large objects showing improved hydrodynamic properties.

According to another embodiment, it is one further object of the present invention to provide a nanocarbon material based on renewable sources.

According to another embodiment, it is one further object of the present invention to provide a nanocarbon material effective in water purification, specifically with respect to metal species, which are difficult to remove with activated carbon as such.

According to another embodiment, it is one further object of the present invention to provide carbon-based filler materials showing a lower percolation limit than conventional spherical or platelet-shaped fillers such as carbon black.

### BRIEF DESCRIPTION OF THE PRESENT INVENTION

The present invention relates to a carbon-carbon composite material comprising a carbonaceous carrier and nanosize carbon structures (partially also referred to as "nanocarbon"), wherein the nanosize carbon structures are grown on the carbonaceous carrier.

As explained below in further detail, "carrier" is to be understood as a material having a greater size (e.g. average diameter or longest axis) than the nanocarbon grown thereon, preferably at least the triple size, or at least the fivefold size, or at least the 10-fold size with respect to the nanocarbon size (e.g. average diameter). A suitable carrier should be able to immobilize nanocarbon in a structure showing mechanical stability. In line with the present invention, nanocarbon structures themselves, such as CNTs or CNFs, are not to be regarded as "carbonaceous carrier" material.

According to one embodiment, the carbonaceous carrier is porous as in activated carbon. A preferred source of activated carbon is vegetable, in particular palm kernel shells. The nanosize carbon structures are preferably selected from carbon nanofibers (CNF) and carbon nanotubes (CNT).

Another embodiment, which was developed for network-forming fillers, concerns nanocarbon grown on carbon black particles.

The process for the manufacture of such carbon-carbon composite materials comprises the steps of
treating a carbonaceous carrier material with a catalyst capable of forming nanosize carbon structures, and
growing nanosize carbon structures on the treated carrier in a gas atmosphere comprising a carbon-containing gas by means of a CVD method.

According to one embodiment of this process, the catalyst treatment step is conducted by impregnation with a bifunctional catalyst material and comprises the following steps:

a) impregnating the porous carbonaceous carrier material with a metal-containing catalyst material, said metal being capable of catalysing the oxidation of carbon and the formation of nanosize carbon structures,

b) calcining the impregnated porous carbonaceous carrier material under oxidative conditions, for instance to modify the pore structure of said carrier,

c) optionally newly impregnating the carrier obtained with said catalyst material and calcining the newly impregnated carrier material,

d) reducing the catalyst material, and

e) growing nanosize carbon structures on the carrier in a gas atmosphere comprising a carbon-containing gas by means of a CVD method.

A modification of this process using two different types of catalyst material is also claimed as embodiment comprising the steps (a') to (e') and defined below and in the claims. (It should be noted that the term "catalyst material" is used hereinafter broadly to denote the actual catalytically active species and precursors thereof, the intended meaning being derivable from the context.)

These process variants are particularly suitable for porous carbon carriers, such as activated carbon.

According to one further embodiment, the metal catalyst is deposited (already in the metallic form) in a CVD technique from volatile compounds of the selected metal catalyst on the carbon carrier material, such as carbon black particles.

The present invention thus provides a carbon-carbon composite material wherein nanocarbon is anchored to the surface of a carbonaceous carrier, preferably activated carbon (in the following also referred to as "AC") or carbon black particles. The anchoring is preferably effected by close mechanical proximity between nanocarbon and support carbon. In addition, chemical bonding can take place via carbon-carbon bonds or via bonds between carbon (of the nanocarbon) and any other non-carbon element (e.g. Si, O) the carbonaceous carrier may contain.

The process according to the present invention allows tailoring various properties (filler properties, porosity, hydrodynamical, surface chemical properties, etc.) independently from each other, which represents a major advantage over carbon black or activated carbon materials as such where the manufacture or activation procedure influences all properties at the same time. Moreover, it is possible to control interface properties over six orders of magnitude (atomic to macroscopic) by localizing and/or adjusting the type and density of nanocarbon structures.

The carbon-carbon composite of the present invention is also distinguished by the use of essentially one chemical element (carbon) for all dimensions of structuring. This avoids the combination of nanocarbon with major amounts of non-carbon carrier materials and the resulting discontinuities in transport and chemical properties as well as the resulting deterioration of overall compound properties and chemical instability.

The aforementioned chemical binding between nanocarbon and activated carbon leads to mechanical and chemical stability and preserves the hierarchical structure during extended operation, such as recycling.

Moreover, the independent control of decisive product characteristics is most suitable to optimise media transport in the case of hydrodynamical applications.

### BRIEF DESCRIPTION OF THE FIGURES

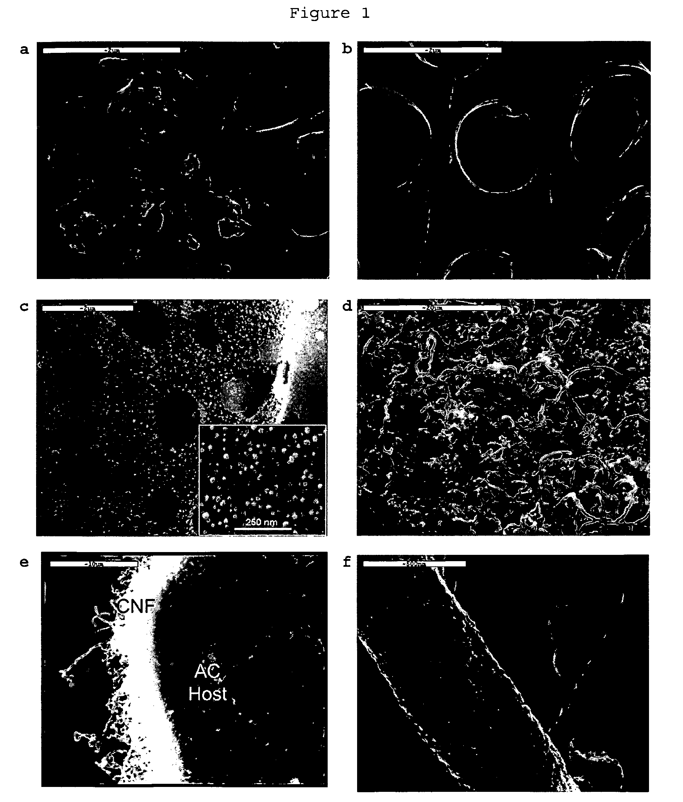

Figure 1 shows the SEM images of
a) activated carbon obtained from palm kernel shells,
b) said activated carbon after calcination and mild oxidation at 400°C (AC-400),
c) the calcined activated carbon after impregnation with iron, "catalytic drilling" of further pores into the activated carbon structure and reduction of catalyst particles,
d) carbon nanofibers (CNFs) grown on the calcined activated carbon,
e) a cross section image of CNFs on the outer surface of the calcined activated carbon,
f) an image of single CNF showing the rough surface morphology.

The scale bars correspond to 2 µm in (a) to (c), 20 µm in (d), 10 µm in (e) and 500 nm in (f).

Figure 2 shows the BJH (Berritt-Joyner-Hallenda) adsorption pore size distribution of the as-obtained activated carbon (AC), the activated carbon after impregnation with iron catalyst, oxidation ("catalytic drilling" of holes into the activated carbon) and catalyst reduction (referred to as "Fe/AC"), and the final carbon-carbon composite (NAC) with CNF grown inside and outside the activated carbon.

Figure 3 shows
a) an SEM image of immobilized CNF with Fe catalyst in SE (secondary electron) mode.
b) an SEM image of immobilized CNF with Fe catalyst in BSE (back-scattered electron) mode,
c) a TEM image of an immobilized CNF with Fe catalyst particle on the tip and
d) a high resolution TEM image showing the herringbone structure of the immobilized CNF.

The scale bars are 5 µm in (a) and (b) as well as 100 nm and 10 nm in (c) and (d), respectively.

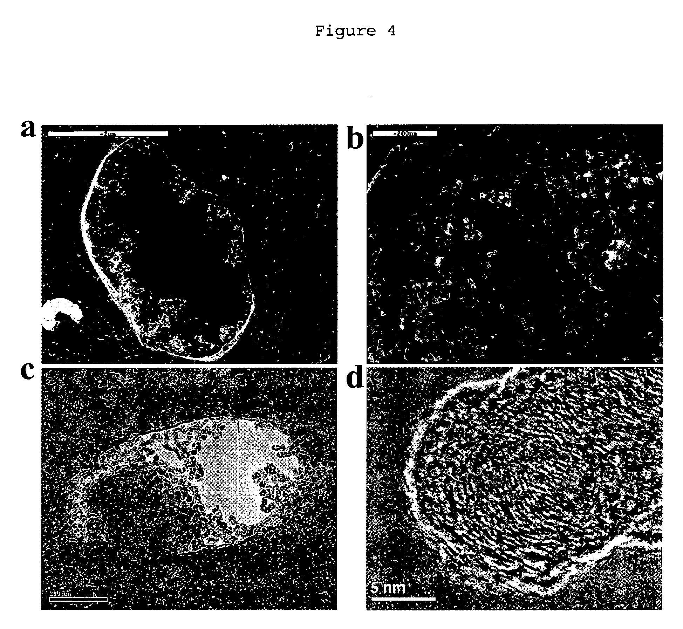

Figure 4 shows
a) an SEM image of cross-section of CNF on activated carbon,
b) an enlarged image of figure 4a,
c) a TEM image of cross section of CNF on activated carbon,
d) a high resolution image of the CNF shown in figure 4c.

The scale bars are 2 µm in (a), 200 nm in (b) and (c), and 5 nm in (d).

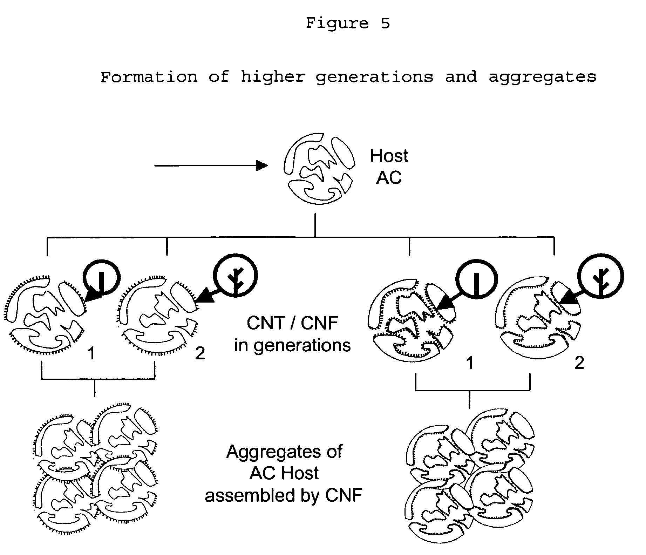

Figure 5 shows schematically the formation of higher generations of nanocarbon structures and the formation of aggregates from the carbon-carbon composite material of the present invention.

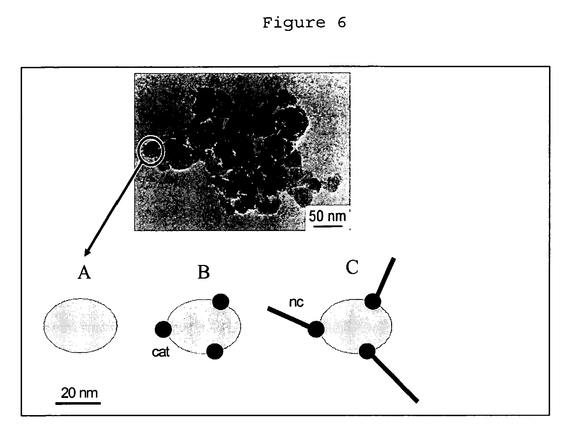

Figure 6 shows schematically nanoscopic carbon carriers (carbon black primary particles) on which nanocarbon structures (CNF/CNT) were grown.

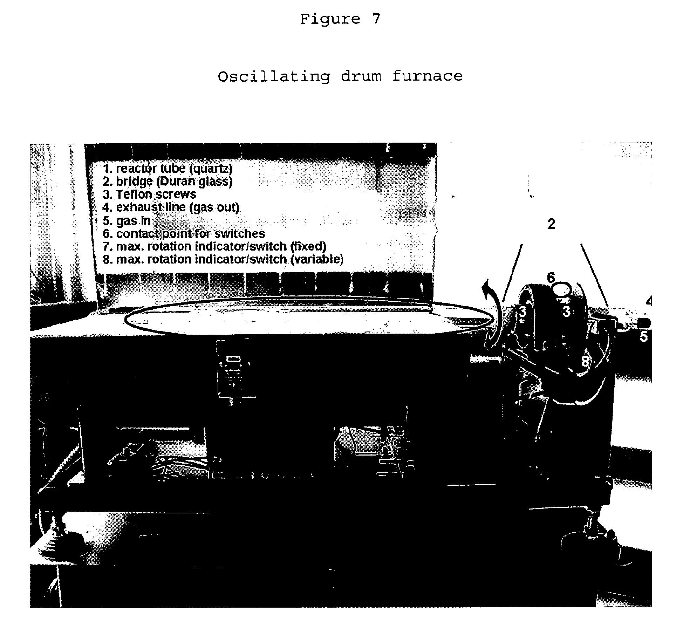

Figure 7 is a photograph of an oscillating drum type furnace useful in the manufacture of the claimed carbon-carbon-composites.

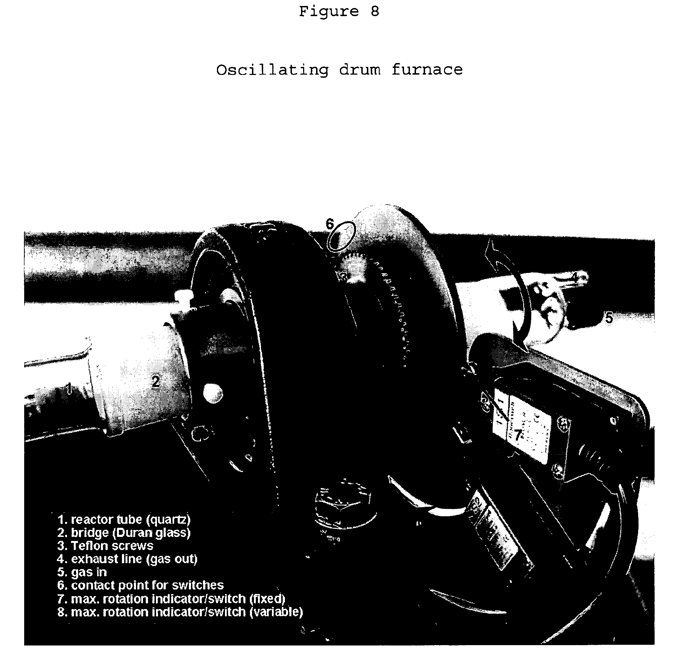

Figure 8 shows details of the furnace of Figure 7.

### DETAILED DESCRIPTION OF THE INVENTION

### 1. Composite

### 1.1. Individual composite particles

The present invention encompasses a series of carbon-carbon composites combining at least one element selected from the family of nanostructured carbons (nanocarbon) and a conventional carbon material acting as a support (carrier).

The particle size of carbonaceous carrier materials is not specifically limited, as long as it exceeds the nanocarbon size in such a magnitude that it can exert its carrier function.

Preferred carrier sizes range from 5nm to 10mm. If not stated otherwise, "size" refers to the average size of the longest axis in the case of non-spherical particles or the average diameter of spherical particles. The invention discriminates three preferred categories of immobilized nanocarbons (INC) according to the size of the carrier carbon:
i) macroscopic carriers with sizes between 10 mm and 10 µm, preferably between 5 mm and more than 100µm, more preferably between 2mm and 0,5µm, e.g. 0,1 to 2 mm being suitable for instance for applications with gas/liquid interactions.
ii) mesoscopic carriers with sizes between 100µm to more than 100 nm, preferably between 50 µm and 250 nm which are most suitable for intensified gas/liquid interactions requiring mechanical fixation on a macroscopic carrier. For instance, these are suitable for applications relating to painting, printing and ink-jet dispensing and for stationary binder-filler applications.
iii) nanoscopic carriers with sizes below 1µm, preferably between 10 and 500nm, in particular between 25 and 100nm. These can be advantageously used for instance in binder and filler applications where excellent network-forming properties are required.

There is no strict boundary between these groups. Moreover, references in the specification to "µ-sized carriers", for instance AC carriers denote preferred average particle sizes ranging from 50 µm to 500 µm.

For the network-forming composites based on nanoscopic carriers, the size selection is done such that the carbon carrier (e.g. spherical or platelet-shaped) is preferably 5-50 times, more preferably 10 to 20 times larger in size (e.g. average diameter) than the average diameter of the nanocarbon grown on it.

The carrier material on which the nanocarbon structures are to be grown can be selected from known carbonaceous materials. The carbonaceous structures of such material preferably contain or essentially consist of amorphous carbon and/or graphit-like (sp²-conjugated) structures, i.e. graphene layers or stripes which may however be distorted and interconnected with each other under formation of a three-dimensional network. Similarly, it is possible that the carbonaceous carrier is porous.

The shape of the carrier material may for instance be spherical, oval or platelet-like.

Preferred surface area values of the starting material range from 10 to 2000 g/m² as measured by BET (Brunauer-Emmett-Teller) nitrogen physisorption at 77K.

One preferred choice for the carbonaceous carrier is activated carbon (AC) as obtainable from mineral, animal or plant sources such as wood (charcoal). Preferred surface area values of the AC starting material range from 300 to 2000, preferably 500 to 1500 m²/g, as measured by BET (nitrogen, 77K). The pore volume of the starting material is preferably 0,2 to 0,5 cm³/g and can be measured by nitrogen physisorption (77K) according to the BJH model.

In line with the present invention, any given carbon source may however be converted to a carbonaceous material having the desired properties. Thus, it is for instance also known to make activated carbon from crosslinked resins, e.g. spend ion exchange resins such as styrene-divinyl benzene polymers or phenol-formaldehyde resins. Preferably, renewable agricultural commodities are utilized such as hardwoods, grain hulls, corn cobs, nutshells and kernels (e.g. palm kernel shells or almond kernel shells), seeds or stones (such as olive stones). The use of silicate-containing plant material sources such as kernels, seeds or stones is preferred, the use of palm kernel shells being most preferred. The bioorganic polymers present in silicate-containing sources often also contain lignins and are strong and well structured in several dimensions, reactive for modifications and available in masses. Activated carbons made from these natural precursors preserve at least in part the biological cell structure and preset the disposition of a macropore network. The inorganic ingredients, such as silicates do not only enhance the mechanical strength of the resulting activated carbon, but may further serve as an anchoring site for the catalyst and therefore for the nanocarbon. Moreover, oxygen-containing functional groups typically present on the surface of activated carbon may provide at least initial anchorage for the impregnated nanocarbon growth catalyst.

For network-forming composites the carrier of choice is carbon black as commercially available in many forms. Typical surface areas are 10 to 1000, preferably 200 to 800 m²/g. Carbon black from any source (typically from the incomplete combustion and/or thermal cracking of hydrocarbons) and in any commercially available from can be used, for instance carbon black obtained from acetylene processes, furnace black, channel black, lamp-black or thermal black. With respect to the chemical composition, there is also no specific limitation. For non-treated carbon blacks, typical amounts of non-carbon elements (H, N, S, O) are up to 8 wt.% whilst oxidative after treatments can increase the typical oxygen content of 0 to 5 wt.% up to 15 wt.%. In accordance with the present invention, it is preferred to use carbon black with hydrophilic surface properties. It is particulary preferred to use oxygen-containing (e.g. 0,1 to 15 wt.%) carbon black where the oxygen is preferably present in the form of acidic oxides and/or hydroxy groups.

To select particularly suitable hydrophilic carbon black types, it is checked whether these show an acidic reaction in pure water and have an isoelectric point of the carbon differing from the neutral point (pH 7) by 1 to 4, preferably 2 to 3 pH units.

Some available carbon black types possess a primary structure of essentially spherical particles (having, as a rule a diameter of 5 to 500nm) forming a secondary structure with typically chain-like aggregates. These aggregates are characterised by relatively weak interactions between the primary particles (internally covalently bonded basic structural units) and the higher order structures being effected by dispersive forces involving functional groups. In the present invention, it is preferred to use carbon black types wherein at least the majority of primary particles is already present in the non-aggregated form. For other types, it is preferred to disintegrate the secondary structure. Accordingly, it is preferred that the primary carbon black particles have an average diameter as indicated before for "nanoscopic" carrier materials.

Suitable disintegration measures depend on the type of interaction occurring between the primary particles and can be properly selected by the skilled person. With acidic, hydrophilic carbon black types, it is for instance preferred to treat the aggregates with a base, for instance an aqueous base, preferably volatile bases such as ammonia, to disintegrate the secondary structure. Alternatively, mixtures, preferably two phase mixtures of this base and an organic solvent can be used, more preferably a mixture of liquid or concentrated ammonia and an aromatic solvent such as toluene or xylene. The disintegration process is enhanced by mechanical agitation or ultrasonication.

In accordance with the present invention, porous, carbonaceous carrier materials, such as AC are preferably modified prior to the impregnation with catalyst and nanocarbon growth. These modification steps, which are explained in further detail in the following section (2) aim at increasing the mesoporosity (pores in the order of 50 nm to 5 µm, in particular 100 nm to 1 µm), to widen existing pores, to create new pores ("hole drilling"), to remove micropores (pores below 50 nm), to remove inorganic components of the carrier material (e.g. activated carbon), and/or to open the inner structure, i.e. to make closed pores accessible and to create a three-dimensionally interconnected pore network.

These treatments may lead to drastic changes in terms of pore size, pore size distribution and inner surface area. Further changes naturally result from the growth of nanocarbon on the outer surface of the carbonaceous carrier, or, if applicable, the growth of nanocarbon in the pores (nesting of nanocarbon in carrier pores). Depending on the carrier type used, the type and degree of porosity present therein or prepared through modification and the type and location of nanocarbon, a wide range of surface area and pore sizes thus can result. Preferably, the final carbon-carbon composite shows a BET surface area, as measured by N₂ physisorption (77K), of 100 to 500 m²/g, preferably 150 to 350 m²/g and a pore volume of preferably 0,1 to 0,5 cm³/g, more preferably 0,2 to 0,4 cm³/g.

As chemical constituents, the activated carbon starting material preferably contains not more than 15, more preferably not more than 8 wt.-% of non-carbon elements. The ash-forming heteroelements should preferably not exceed 7 wt% (e.g. not more than 4 wt%) and the volatile foreign elements together should preferably not amount to more than 7% (e.g. not more than 4 wt%). The non-carbon elements may include silicon, oxygen, nitrogen and/or hydrogen, metals and other naturally occurring non-carbon elements, which are not removed during the preparation process for activated carbon. As mentioned, silicon is typically present as silicate in activated carbon from specific natural sources whereas oxygen and nitrogen may still be included in not fully carbonised biopolymers, and oxygen functionalities may result from surface oxidation reactions taken place during AC manufacture. With a few exceptions (removal of inorganic components by leaching, please refer to procedure explained under item 2.1), this chemical composition is essentially preserved during the modification steps used in the present invention and can also be found in the carrier as present in the final carbon-carbon composite. This applies in particular to the non-volatile ash-forming heteroelements such as metals or silicon.

As "nanosize carbon structures" (nanocarbon structure) we understand carbon structures having a diameter of less than 1 µm. It is not required that all nanocarbon structures grown on the carbonaceous carrier fulfil this requirement even though it is preferred that at least the major proportion thereof (number based), i.e. more than 50 % has a diameter of less than 1 µm. Preferred average diameter values for the carbon structures grown on the outer surface of the carrier range from 10 to 900 nm, for instance 20 to 800 nm, e.g. 30 to 700 nm, 40 to 600nm, or 50 to 500nm. Carbon structures nested inside the carrier can basically have the same average diameters, although they tend to have smaller average diameters, e.g. in the range of 10 to 100nm, or 20 to 50nm.

The nanocarbon structure can adopt various shapes and may be selected from carbon nanotubes (CNT), carbon nanofibers (CNF) and mixed or modified forms such as onions, bamboo or peabody. Carbon nanotubes may be of single wall (SWNT) or multiwall (MWNT) type, the latter being preferred. Both CNT types are hollow and typically characterized by the presence of graphene layers being substantially parallel to the tube axis. Hollow structures may also arise from strands of parallel stacks of small graphene platelets. The resulting object is characterised by walls exposing to a large extent the prismatic face of the graphene structure. The graphene layers constituting carbon nanofibers (CNF) may be either aligned with the fiber axis or vertical thereto or adopt orientation angles between >0° and <90°. Furthermore, various types of CNFs exist where the orientation of graphene layers is not isotropic through the fiber cross-section as in herringbone structures where the graphene layers adopt a V-shaped arrangement. Furthermore, nanocarbon objects may be composed of sections of the two archetypes combined in one elongated object. Such objects combine the stability of CNT and chemical reactivity of CNF in one structure.

Among these, multiwall nanotubes (MWNT) and carbon nanofibers and their combination are preferred for the purposes of the present invention. These may have the above given diameters. Their length can range from 10 to several 100 nm. In accordance with the present invention, it is for instance easily possibly to generate CNT/CNFs showing a length of about 0,1 to 50 µm and more. A preferred upper value is 0,5 to 1,0 µm to preserve the mechanical stability in flowing matrices.

In terms of chemical constituents, the nanocarbon structure is essentially composed of carbon although, as known in the art, minor amounts of other constituents (typically less than 10 wt.-%, e.g. less than 5 wt.%) may be present. Since carbon nanotubes and nanofibers frequently grow according to the "catalyst tip model", the catalyst used for generating the nanocarbon structure may be present at one distal end and/or embedded in the nanocarbon structure. Furthermore, specifically the prismatic ends of graphene layers, but also the layers themselves may carry non-carbon elements, such as hydrogen or hydroxyl or functional groups derived from hydrogen, oxygen, carbon, sulfur, halide and/or nitrogen.

These functional groups may also be intentionally introduced and/or modified in subsequent treatment steps, as explained in further detail below under item 2.1.6. Furthermore, heteroelements like nitrogen or boron may be integrated into the graphene units during their CVD growth phase.

The amount of nanocarbon structures grown on the carbonaceous carrier material is preferably 0,1 to 10 parts by weight, more preferably 0,5 to 2 parts by weight, based upon 100 parts of the carbonaceous carrier material.

The composite material of the invention possesses has itself a self-sustaining three-dimensional structure in contrast to (two-dimensional) layers requiring three-dimensional carrier materials such as tube pieces, rings or spheres to provide them with mechanical stability.

If the carrier material shows little or no porosity, the nanocarbon structures will be predominantly located on the outer surface. With porous carriers, such as activated carbon, the present invention allows controlling the site (and the type and density) of nanocarbon structures. These can be generated on the outer surface, nested inside the pores or both. This flexibility and degree of control allows tailoring the composite properties to the needs of the user. For filler applications it will for instance be preferred to grow as far as possible the nanocarbon structures on the outer surface of the carrier material to achieve the maximum efficiency. The use as purification agent for fluids (e.g. water), on the other hand, may require higher residence times of the fluid in vicinity of the nanocarbon structures as well as specific hydrodynamic properties. Under these circumstances, nanocarbon growth only inside the pores, or inside the pores and on the outer surface is believed to be favorable. Generally, composite materials to be used as purifying agents for fluids display the following preferred features:
- They are made from porous carriers materials, preferably activated carbon made from vegetable sources such as palm kernel shells.
- The nanocarbon structure is of CNT and/or CNF type and optionally surface-functionalised.
- The nanocarbon structures are at least located inside the pores.
- The final composites have a BET surface area of 200 to 500 m²/g and a porosity of 0,2 to 0,9 cm³/g.
- The composite is mechanically stable against flow erosion and attrition of the macroscopic particles in the bed. This is achieved by the use of AC types containing a bio-inorganic polymer that provides a hard scaffold for the nanocarbons. These can be grown to a suitable size and thickness to display sufficient mechanical stability on their own. The anchoring between the AC carrier and the nanocarbons can be strengthened by the presence of the bio-inorganic polymer, e.g. silicate providing binding sites for the nanocarbon growth catalyst or by later-explained techniques for immobilizing these catalyst particles on the AC carrier surface.

### 1.2. Aggregates of composite particles and higher generations of nanocarbon structures.

As Fig. 5 shows, the present invention has also proved as versatile tool for preparing more than one generation of nanocarbon structures or individual composite particles.

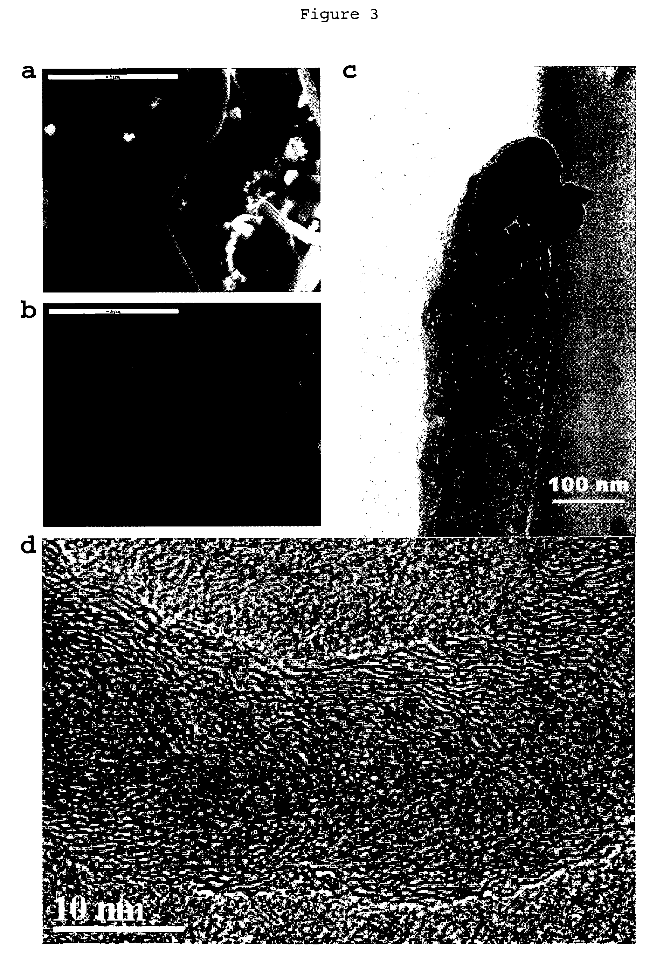

Reference number (2) denotes branched CNT/CNF structures where presumably catalyst particles embedded in an existing CNT/CNF structure trigger branching. CNT/CNF structures suitable for grafting a second generation can be easily recognized from SEM images with bright contrast (such as figure 3a and b) if the catalyst particle is located within the CNT/CNF structures. This second generation of CNT/CNF structures can be used for optimising the property profile (surface area, hydrodynamic properties, etc.) in view of the intended application.

Simultaneously, it is also possible to produce aggregates of the individual composite particles, as shown in the lower part of Fig. 5, by making entangle the nanocarbon structures on the outer surface and/or creating chemical bonds therebetween.

Entanglement can be achieved if CNTs or CNFs are grown long enough to interpenetrate each other.

A chemical binding between individual composite particles will be the consequence if functional groups present on the nanocarbon structures (or introduced by surface modification) are subjected to suitable linking reactions known in the art. Carboxylic groups can for instance be joined with dihydroxy or diamine linkers and vice versa. Moreover, Diels-Alder cycloadditions are a very effective tool for condensing unsaturated double bonds of graphene layers.

Hard porous carbon composites result from crosslinking the carbon-nanocarbon composite particles with mineral formers such as silicate, borate or transition metal oxide. This can be achieved by hydrolysis of suitable metal-organic precursors such as alkoxides using functional OH groups at the surface of the nanocarbon.

### 2. Process for the manufacture of composite materials

The process for the manufacture of a carbon-carbon-composite material comprises the steps of
treating the carbonaceous carrier material with a metal-containing catalyst material, said metal being capable of forming nanosize carbon structures,
growing nanosize carbon structures by means of a CVD (chemical vapour deposition) method on the treated carrier in a gas atmosphere comprising a carbon-containing gas.

Suitable metals or metal mixtures for catalysing nanocarbon growth are well known in the art. They include, but are not limited to iron (Fe), nickel (Ni) and cobalt (Co), mixtures of iron with alloy-forming transition metals or cerium (Ce), Pd and Pt, iron, cobalt and nickel being preferred.

After the treatment step and optional further steps, the catalyst material is present in its active metallic form catalysing nanocarbon growth. The catalyst metals are preferably applied to the carrier (macro-, meso- or nanoscopic) by impregnation techniques using mono- or bifunctional catalysts (cf. the following items 2.1. and 2.2.) or by means of CVD techniques (item 2.3.) using gaseous decomposable metal compounds such as metal carbonyls.

Suitable conditions for growing nanosize carbon structures on the carbon carrier are specifically explained below under reference to step (e) (item 2.1.5.). They can be employed independently from the type of carrier used.

### 2.1. Process using bifunctional catalyst

According to one preferred embodiment of the claimed process, the catalyst metal used is bifunctional and can catalyse, in its oxidized form, the oxidation of carbon and, in its reduced form, the growth of nanocarbon structures. Metal catalysts of this type are well known and include for instance iron (Fe), nickel (Ni) and cobalt (Co) as well as mixtures of iron with alloy-forming transition metals or cerium (Ce), iron being preferred for applications (e.g. drinking water purification) where the use of non-toxic materials is of essence.

Even though, in principle, the process described below can be used for macroscopic, mesoscopic and nanoscopic carrier materials, it has been developed for macroscopic and mesoscopic carrier materials, in particular porous materials, such as activated carbon.

Processes employing bifunctional metal catalysts preferably comprise the steps of
a) impregnating the porous carbonaceous carrier material with a metal-containing catalyst material, said metal being capable of catalysing the oxidation of carbon and the formation of nanosize carbon structures,
b) heating the impregnated porous carbonaceous carrier material under oxidative conditions to modify the pore structure of said carrier,
c) optionally newly impregnating the obtained carrier with said catalyst material and calcining the newly impregnated carrier material,
d) reducing (and preferably activating) the catalyst material, and
e) growing nanosize carbon structures on the carrier in a gas atmosphere comprising a carbon-containing gas by means of a CVD method

Suitable starting materials for the carrier have already been described under item 1. According to preferred embodiments of the present invention, the carbonaceous carrier, specifically activated carbon is not used in the commercially available form, but modified prior to catalyst impregnation and nanocarbon growth for the reasons stated above. Two preferred modification procedures (A and B) are explained below.

The target of the first procedure (A) is increasing mesoporosity while retaining high surface area. For this purpose, the porous carrier material, in particular the activated carbon from vegetable sources is
- optionally crushed or comminuted,
- optionally subjected to a size selection procedure such as sieving to achieve a more homogenous particle size distribution (e.g. around 0,5 mm), and
- calcined, preferably in flowing air at a preferred temperature of 300 to 700°C, more preferably 350 to 500°C.

This procedure reduces the (small) amount of organic residues in the carrier materials thereby leading to a so-called "autogenous hole drilling" at those sites where organic residues oxidize and evaporate. Moreover, the mild oxidizing conditions used are believed to remove debris, clean the pores and enlarge existing pores.

A second standard procedure (B) starts from the vegetable AC source, such as palm kernel shells itself. These shells are
• preferably crushed or comminuted,
• followed then by a preferred size selection step such as sieving to achieve a more homogenous particle size distribution,
• The resulting shell particles are subjected to a leaching step under basic conditions in the presence of ammonia or a metal hydroxide, preferably the hydroxide of an alkaline metal such as NaOH. The ammonia or the alkaline metal hydroxide are preferably used as aqueous solution having a normality of at least 1N (for instance 6N NH₃, 6N NaOH). The leaching step is preferably conducted at or above room temperature, more preferably at 40 to 80°C. Depending on the temperature used, suitable extraction times range from 30 min to 1 day, 1 hour to 10 hours being preferred. It is recommendable to stir the mixture quickly. The volume ratio carbon source/leachant ranges preferably from 1:0,1 to 1:10, in particular 1:0,8 to 1:7 (e.g. 1:5).
   The following washing step is preferably conducted with a suitable device, preferably a soxhlet over a longer period of time (e.g. one hour to one week, e.g. 24 h). This washing step may be followed by a second washing step in a suitable aromatic (e.g. xylene) or alcoholic solvent (e.g. ethanol) which are both preferably heated prior to use.
• The following carbonisation step is conducted under inert gas in a furnace. Preferably the inert gas is flowing. Suitable conditions involve for instance 200 ml/min N₂. The furnace is heated to a final temperature preferably ranging from 300 to 430°C, more preferably 330 to 400°C with a heating rate of preferably 3K to 7K/min and held at the final temperature over a longer period of time, preferably 4 h to 20 h, in particular 10 h to 14 h.

If the above size selection steps of procedure (A) or (B) aim at isolating mesoscopic or nanoscopic carriers, these fractions are preferably separated by flotation steps in water containing a suitable surfactant as flotation aid or aliphatic alcohols (e.g. ethanol).

As compared to the previous described standard procedure (A), this sequence is intended to achieve a large increase of mesoporosity, to remove micropores and in addition to lower the content of inorganic filler, such as silicate in the leaching/washing step. This may be favorable for some applications, as in tyre manufacture where otherwise hard inorganic ingredients such as silicate may cause an undesired degree of abrasion. The carbonisation step entails moreover a pre-opening of the carbon skeleton.

Next, the commercially available carbonaceous carrier, such as AC, or AC modified by procedure (A) or (B) is then preferably subjected to impregnation (step a) and calcination in an oxidative atmosphere (step b).

The conditions of step (b) can be selected such that "catalytic hole drilling" takes place during calcination. Catalytic hole drilling strongly increases mesoporosity (pore diameter from 50 nm to 5 µm, in particular 100 nm to 1 µm) by creating new pores and/or enlarging existing pores. Moreover, it leads to a more homogenous pore size distribution as a large fraction of the carbon filler is removed and a structure of intersecting pipes results. Through the action of the catalyst, volume elements with low natural porosity are drilled in the same way as naturally porous volume elements of the bioinorganic material.

### 2.1.1. Impregnation step (a)

Preferably, aqueous solutions of a suitable metal salt are used for impregnating porous carrier materials such as activated carbon. Generally, salts that tend to leave residues in the carrier material after calcining steps are to be avoided. Correspondingly, it is preferred to use salts which, upon heating, form volatile components such as metal nitrates or organic metal salts including acetate, acetylacetonate, oxalate or citrate. Preferred examples involve nitrate or acetate salts of Fe (+III), Co or Ni, iron nitrate being most preferred.

Generally, it is desirable to achieve loadings of 0,05 to 5 wt.-%, in terms of the corresponding metal oxide, preferably 0,1 to 3 wt.-%, based on the weight of the dry carrier used for impregnating. The impregnation process is carried out on pre-wetted samples at a pH which differs preferably by 1 to 4, more preferably 2 to 3 units units from the isoelectric point of the AC carbon using the "incipient wetness" technique. Pre-wetting is conducted with water, preferably an amount thereof that is sufficient to suppress dusting of the sample optionally followed by a drying step. Pre-wetting with water is believed to prevent premature precipitation of metal salt upon contact of solution and carrier. It is preferred to dry the pre-wetted sample at room temperature under ambient conditions. The "incipient wetness" technique known in the art of catalyst manufacture involves treating the carrier with amounts of the impregnating solution that correspond essentially to the pore volume. This is best achieved by computer-controlled slow dosage of impregnating solution into the carrier sample while keeping the carrier particles in movement, for instance by agitation or preferably vibration. Metal salt solutions having a molarity of preferably 0,01 to 0,5M (e.g. 0,1M) and a pH of 2 to 6, in particular 3 to 5 have turned out to be particularly suitable. Porous carrier and metal salt solution are left standing in contact over a time period of preferably 5 min to 24 h, more preferably 15 min to 10 h (preferably under suitable agitation). After the impregnation, the loaded carrier material is dried, for instance in static air at about 60°C over 12 h. It is of particular advantage to carry out the impregnation in many small parallel batches of 1 to 5 g size and to combine the impregnated batches before drying. Such procedure will result in a particular homogeneous distribution of catalyst material over the AC carbon.

### 2.1.2. Calcination step (step b)

In this step, the impregnated carrier material is heated in an oxidizing atmosphere to convert the metal salt to the corresponding metal oxide, thereby also fixating the same, while the counterion is volatilised. The calcination temperature depends from the type of metal used and, if applicable, the type and degree of carrier modification to be achieved, but preferably ranges from 150 to 650°C, in particular 200 to 600°C.

In the most simple embodiment of this step, the impregnated carrier material is subjected to calcination at relatively low temperatures in air or a milder oxidizing atmosphere, preferably the mixture of an inert gas, such as nitrogen with 0,5 to less than 20, e.g. 1 to 10 Vol.% oxygen. Temperatures as low as 200 to 350°C, e.g. 200 to 300°C, in particular 220 to 280°C are preferably used. Preferred reaction times range from 30 min to 8 h, more preferably 1 h to 4 h.

According to another embodiment, the pore structure of the carrier material is "modified". This expression summarizes various simultaneously proceeding processes also referred to as "catalytic hole drilling". These involve, but are not limited to pore size enlargement, opening of the inner structure (closed pores) under formation of a three-dimensionally interconnected pore network and/or achieving a more homogenous pore size distribution.

This step is also conducted under oxidative reaction conditions, but at higher temperature than the first embodiment. However, care should be taken that the conditions chosen (oxygen content in reaction gas, temperature, etc.) do not cause a combustion of carrier material. Preferred reaction conditions involve temperatures of 450 to 550°C, in particular 480 to 520°C and the use of nitrogen containing a small amount of oxygen (preferably less than 0,5 Vol.%, in particular less than 0,1 Vol.%, but more than 0,0005 Vol.%). Any other inert gas containing a similar small amount of oxygen can be equally used. The reaction is preferably conducted at gaseous hourly space velocities (GHSV) of 500 to 2000 h⁻¹, preferably 600 to 800 h⁻¹. Preferred reaction times range from 30 min to 12 h, more preferably 2 h to 6 h, in particular 3h to 5h.

While the above conditions reflect the presently known best mode for carrier modification, it is conceivable to change these, for instance by using flowing air at lower temperatures (for instance 400°C) and otherwise similar conditions.

### 2.1.3. Optional catalyst impregnation, calcination and fixation (step c)

Carrier materials, which have not jet been subject to impregnation and calcination, such as commercially available AC, AC samples treated only according to procedure (A), or AC produced according to procedure (B) still lack the necessary catalyst material for conducting nanocarbon growth. For these samples it is essential to conduct the following impregnation and fixation procedure according to one variant of the present embodiment such variant comprising the steps (c), (d) and (e) and optionally (f) as described below.

Carrier materials where impregnation/calcination has already taken place, on the other hand, do not require the following step. For various reasons, it may however be beneficial to conduct the same. For instance, it may turn out after calcination that the catalyst residues are not yet present on all carrier surfaces where they are needed for catalyst growth. Further, in this step, it is possible to adjust the catalyst particles, specifically the size thereof in view of the envisaged type of nanocarbon. Thus, it has been reported by R. T. K. Baker et al. (in J. Catal. 1972, 26, 51 and Materials Research Society Symposium Proceedings, Vol. 2, 1999) that nanofibers are typically obtained from large Fe particles (> 20 nm), while nanotubes were formed with the aid of smaller particles (< 20 nm). From M. Audier et al. (Carbon, 1980, 18, 73) it is also known that the shape and the size of the metal catalyst control the nanocarbon morphology. This can be achieved in the present optional impregnation and fixation step, for instance by increasing catalyst size through higher loadings and conditions favouring aggregation. The shape and size of the catalyst particles are preferably determined by the following conditions and can be varied to a great extent: the pH of starting solution with respect to the isoelectric point of carbon, catalyst loading (amount), type of metal anion, calcination temperature and/or concentration of reductant gas in the inert carrier gas during the subsequent reduction step.

Accordingly, it is preferred to subject the carrier material to the steps of impregnating with a catalyst material capable of catalysing nanocarbon growth, calcining the impregnated material and fixing the catalyst.

The impregnation step is preferably conducted with "pre-wetted carrier" using the "incipient wetness" technique as described under item 2.1.1. The carrier material is accordingly brought in contact with an aqueous solution of a suitable metal catalyst salt. Suitable catalyst metals are the same (e.g. Fe, Ni, Co) as stated above, iron being preferred. The same applies to the type of salts to be used. While metal (e.g. iron) acetate or citrate is the most preferred choice for the generation of very small nanocarbon objects, nitrate, sulphate and chloride may be used as sources for larger nanocarbon objects. An alternative is the use of nitrate or acetate or acetylacetonate solutions in non-aqueous solvents such as THF or ethanol, which will reduce the time of contact and minimize the particle size of the catalyst giving rise to very fine dispersed nanocarbons on the AC carbon surface. Mixtures of water-miscible ethers (e.g. THF) and alcohols (e.g. ethanol) and water may also be used.

The molarity of this metal salt solution preferably ranges from 0,01 to 5M, more preferably from 0,1 to 1M (e.g. 0,5M). There is no need to adjust the pH value of the solution. pH adjustment represents however one technique of directing nanocarbon growth to a specific site (surface/pores) of porous carrier materials. If the pH of the impregnation solution essentially corresponds to the isoelectric point of the carrier, the catalyst salt will show a similar tendency to impregnate surface and pore areas. The isoelectric point of the carrier surface can be measured by conductometric analysis. The larger the difference between pH and isoelectronic point is, the more the impregnation process will be influenced by kinetic effects. Then, shorter contact times between the porous carrier and the impregnating aqueous metal salt solution favour catalyst localization on the outside (outer surface), while the metal catalyst salts will also reach inner parts (pores) of the carrier material at longer contact times. If moreover catalyst impregnation is to be localized primarily or exclusively to the inner surface (inside the pores) of the AC carrier, impregnation conditions as explained above are chosen that favor catalyst deposition on the inner surface (pores) followed by a drying step as explained below and a (short) washing step with an oxidizing acid, such as cold nitric acid of pH 3. This washing step preferentially removes those metal salt particles that may have deposited on the outside of the carbon carrier. A suitable duration of this washing step can be easily determined based on the analytical techniques explained in the present application.

The overall catalyst loading, expressed as metal oxide, achieved in the present invention is preferably 0,1 to 10 wt.-%, more preferably 0,5 to 5 wt.-% based on the weight of the dry carrier material used for impregnation. "Overall loading" means in this context that the loading resulting from the afore-mentioned impregnation step (a) should be taken into account, if applicable. Impregnation is preferably conducted over at least 5 min, 15 min to 12 h being preferred (e.g. 0,5 h, 6 h). It has turned out to be advantageous to stir carrier particles and aqueous metal salt solution during the impregnation step, preferably with 100 to 500 rpm.

The impregnated carrier material is preferably dried, for instance in static air at 60°C over 12 hours.

The following calcination step is preferably conducted at lower temperatures than used for catalytic hole drilling to prevent the resulting pore modification. Preferred temperatures range from 200 to 350°C, e.g. 250 to 350°C, in particular 280 to 320°C. The calcination step may be conducted under flowing inert gas, such as nitrogen if the same contains a small amount of oxygen (preferably less than 0,5 Vol.%, in particular less than 0,1 Vol.%, but more than 0,0005 Vol.%). However, at these low temperatures, flowing air can be similarly used under proper reaction control without taking the risk that undesired oxidation reactions proceed. Instead of air, a mixture of an inert gas, such as nitrogen with 0,5 to less than 20, e.g. 1 to 10 Vol.% oxygen is suitable.

The carrier material is heated to the final temperature with a preferred heating rate of 1 K/min to 10 K/min, in particular 3K/min to 7K/min followed by a holding time at the final temperature of 30 min to 10 h, more preferably 2 h to 6 h. A suitable calcination time can be determined by means of HP-DSC (variable gas high pressure differential scanning calorymetry) allowing to monitor the kinetics of the metal salt conversion under the exact conditions of preparation

The final, but optional fixation step can be conducted in a relatively broad temperature range of preferably 360 to 540°C, more preferably 380 to 520°C under flowing inert gas, such as nitrogen which should not contain any traces of oxidizing gases. The fixation step allows stabilizing the shape of the catalyst precursor particles (metal salt and/or oxide particles), which in turn control the nature and size of the metal particles being produced from them in the next step of preparation. The final temperatures are reached with a preferred heating rate of 5 K/min to 15 K/min, more preferably 8 K/min to 12 K/min followed by a holding time at this temperature of preferably 30 min to 90 min, more preferably 50 min to 70 min.

It is possible, but not preferred to cool the carrier after calcination or fixation and prior to the following reduction step. Thus, the metal oxide on the carrier surface obtained in step (c) may be directly subjected to reduction in the presence of hydrogen while temperature changes are performed with heating rates of 1 to 10 K/min as indicated below.

### 2.1.4. Reducing and optionally activating the catalyst (step d)

From the previous steps the catalyst material is obtained in its oxidic form. Nanocarbon growth however takes place only in the presence of the reduced metallic form, which is believed to act as "carbon solvent" during nanocarbon growth. In accordance with the present process embodiment, the impregnated carrier material is thus subjected to the following reduction and optional activation steps prior to nanocarbon growth.

The actual reduction step is preferably conducted in the presence of hydrogen, optionally in admixture with an inert gas such as nitrogen. Preferred volume ratios H²/inert gas (e.g. N²) range from 1/95 to 50/50, in particular 3/97 to 30/70. The final temperature to be achieved during the reduction process preferably ranges from 250°C to 600°C, more preferably 300°C to 500°C, in particular 320°C to 450°C. The impregnated carrier material is preferably heated to this temperature in a controlled manner, preferably with heating rates of 1 to 10 K/min, in particular 3 to 7 K/min. The carrier material is then held at this temperature, preferably at least 30 min, more preferably 1h to 8 h, in particular 2h to 6h. Moreover, it is preferred to adapt the flow rate of the hydrogen-containing gas mixture to the sample amount. Preferably 50 to 150 ml/min, in particular 80 to 120 ml/min per 5g carrier sample are used.

The metallic catalyst particles obtained after reduction are already capable of catalysing nanocarbon growth. It has been found that their activity can be enhanced by subjecting them to the following "activation step" optimising their shape and adjusting their surface free energy to the reductive environment typically occurring during nanocarbon growth. The articles reshape in this process from the mostly random initial morphology given by the gas-solid kinetics during their rapid formation. The particles preferably retain a non-equilibrium shape to be small enough for the generation of the nanocarbon the diameter of which ("footprint") strongly correlates with the size of the metal particle. For this purpose, the carrier material having metallic catalyst particles thereon is preferably cooled in an inert gas such as helium to a temperature (e.g. RT) lying considerably below the nanocarbon growth temperature, preferably more than 300, e.g. more than 500 K or more than 600 K below this temperature, and is then reheated in inert gas such as He and/or preferably hydrogen to the nanocarbon growth temperature. The cooling process is preferably conducted over a time period of 1 to 2 h followed by holding at this low temperature (e.g. room temperature (RT), i.e. 20°C) over at least 1 h but not longer than 6 h to prevent contamination of the activated metal particles.

The reheating to the nanocarbon growth temperature is preferably conducted slowly, for instance with a temperature rising rate of 5 to 15 K/min, in particular 8 to 12 K/min. If this temperature has been reached, the inert gas and/or preferably hydrogen is substituted for a mixture containing a carbonaceous gas to conduct step (e). If the reheating has been conducted in an inert gas only, it is strongly preferred to first introduce the hydrogen gas and to purge the growth apparatus fully with hydrogen gas before the carbon-containing gas contacts the active metal particles. Otherwise, a premature deactivation of active metal catalyst particles by carbide formation may occur.

During this activation step and/or the following reheating to the nanocarbon growth temperature, specifically if hydrogen is present, a specific mechanism is believed to contribute to catalyst fixation without wishing to be bound by these theoretical considerations. The analytical survey of the reaction by on-line mass spectrometry of the effluent gas indicates that the reduced catalyst form converts a minor amount of carbon to a volatile product (probably methane) thereby creating a small recess at the site where the catalyst is located. This recess limits the mobility of metallic catalyst particles on the outer and inner surface at higher temperatures. This seems to contribute to the effectiveness of all processes of the invention in those cases where only carbon-containing surfaces are available. Otherwise, non-carbon materials such as silicate may provide the necessary anchorage.

Incidentally, it is this lacking anchorage of the growth catalyst on carbon-containing materials, which has led the art to believe that carbonaceous carriers are not suitable for growing nanocarbon thereon.

### 2.1.5. Nanocarbon growth (step e)

As known in the art, a variety of carbon-containing compounds is suitable as nanocarbon precursor under appropriate reaction conditions. It can be suitably selected from carbon monoxide (CO), non-aromatic (aliphatic) and aromatic hydrocarbons and oxygenated derivatives thereof. The non-aromatic hydrocarbon can be exemplified by ethylene, acetylene, propylene, ethane, propane, etc. Generally, short chain saturated or unsaturated hydrocarbons having not more than 4 carbon atoms are preferred, ethylene and acetylene being most preferred. Aromatic hydrocarbons preferably have 6 to 20 carbon atoms as in benzene, naphtalene or alkylsubstituted derivatives such as toluene, xylene, cumene or ethylbenzene. Examples for oxygenated hydrocarbons are alcohols (e.g. methanol), aldehydes (e.g. formaldehyde or acetaldehyde) or ketones (e.g. acetone), or mixtures thereof. The carbonaceous gas mixture preferably also contains hydrogen, the volume ratio C-gas/H₂ preferably being 10:1 to 1:10, in particular 7:3 to 3:7 as in (C₂H₄ or C₂H₆)/H₂ 60%/40% or 50%/50% by volume. CO is preferably used in admixture with an inert gas such as N₂ or He wherein the volume ratios CO/inert gas are preferably 1/99 to 50/50, in particular 2/98 to 10/90.

The nanocarbon growth temperature must be high enough for the catalyst particles to be active, but low enough to avoid thermal decompositions of the carbon-containing gas under formation of pyrolytic carbon to an undesired extent. Correspondingly, suitable temperatures will depend on the type of carbon-containing gas used and other reaction conditions such as catalyst type, presence of hydrogen and amount thereof, flow rates etc. Preferred reaction temperatures are between 400 and 1000°C, e.g. between 500 and 900°C, e.g. between 600 and 800°C, e.g. between 650 to 750°C.

For reasons of convenience, the reaction is preferably conducted at atmospheric pressure, although in principle higher or lower pressures may also be used. Suitable flow rates and reaction times also depend on the specific reaction conditions chosen even though, based on the present knowledge, flow rates of 50 to 200 ml/min, in particular 100 to 150 ml/min and reaction times of 30 min to 4 h, in particular 1 h to 3 h appear to be preferred.

The reaction conditions allow control of nanocarbon growth on the outer and/or inner surface (pores) of the carbonaceous carrier material. In particular, the choice of reactor systems and the flow rate of reactants may have a strong bearing on the type of products obtained.

Thus, it has been found that relatively slow gas flow rates in a fixed bed reactor favour nanocarbon growth on the inner surface over the outer surface. Suitable reaction conditions involve GHSV space velocities below 1000 h⁻¹. Moreover, in a fixed bed reactor, the chances to bind the carrier (e.g. AC) particles via entanglement of outer surface nanocarbon under formation of to solid aggregates of individual carrier particles are relatively high. Tubular fixed bed reactors may also be used, but seem to lead with some carrier types to a less homogenous product than the oscillating drum type reactors described below.

On the other hand, fluidised bed reactors and the faster gas transfer associated therewith seems to enhance the preferred nanocarbon growth on the outer surface. In the fluidised bed reactor the inter-particle bonding is considerably restricted, which leads to the preservation of the original carrier (e.g. AC) particles even when covered with nanocarbons on the outside.

This in many application preferred form of product can be obtained also in rotating drum furnaces provided that the flow rates of the carbon source gas are slow enough to prevent spontaneous whisker-like carbon growth. GHSV between 600 and 1200 h⁻¹ and strong dilution of the carbon source with hydrogen in a preferred volume ratio of 1:10 to 1:5 were found to be preferred conditions and a suitable compromise between the growth rate (and cost effectiveness of the preparation) and avoiding the macroscopic entanglement.

The most preferred reactor type (furnace) is of the oscillating drum type (oscillating forth and back for instance in a 300° movement) and features helical windings on the inner side of the drum to agitate the carbon material. This brings about a continuous motion of the carbon particles in the gas mixture and allows the operation under absolute exclusion of air. A homogeneous product is achieved thereby as no gradients in gas composition and temperature over the time of treatment will lead to locally differing kinetic conditions of the gas-solid reactions. The benefit of this homogeneity is a narrow distribution of properties over large batches of sample allowing for uniform application properties. A furnace of this type is shown in **Figures 7 and 8.** Depending on the diameter used, the "drum" wherein the reaction takes place may be tubular. Preferred drum materials are quartz glass, high temperature-resistant steel or steel with a ceramic lining. The furnace automatic and computer-controlled switching between for instance 4 different gases allow the uninterrupted synthesis protocol of the nanocarbon-carbon composites to be carried out with great reproducibility. The parameters obtained in this instrument can be upscaled to larger batches as its operation principle does neither depend on critical, instrument positions nor on diffusion controlled transport processes through the solid bed.

Upon termination of the growth reaction, a catalyst passivation step is preferably conducted. For this purpose the carbon-carbon composite formed is cooled from the growth temperature to a temperature T2 (T2 is preferably 350 to 450°C, e.g. to 400°C) by preferably 100 to 400K, preferably 150 to 350K in a non-oxidizing gas atmosphere lacking the carbon-containing gas, such as the hydrogen diluent or pure nitrogen.

At T2 or during the further cooling process from T2 to T1 (T1 is preferably 150 to 250°C, e.g. 200°C), the non-oxidizing gas atmosphere lacking the carbon containing gas is then preferably replaced by an atmosphere containing the carbon-containing gas, for instance the pure carbon-containing gas or a mixture thereof with inert gas, while continuing the cooling process to T1. This process enhances the formation of carbides and/or graphite shells around the activated metal particles and passivates them thereby. In this way, a costly separating process of the metal particles can be effectively avoided for all further applications.

These cooling operations are preferably followed by the final cooling step from T1 to room temperature (RT). If it is desired to introduce functional groups into the carbon-nanocarbon composite, it is preferred to newly remove the carbon-containing gas during the final cooling step in order to maintain the surface reactivity. Otherwise, cooling in a carbon-containing gas to ambient temperature enhances the formation of an inert and hydrophobic variety of the nanocarbon surface which is difficult to functionalize.

The gas atmosphere (feed gas) used during this final cooling step from T1 to RT, and the point in time of its introduction, have a strong impact on the desired surface modification as explained in the following.

### 2.1.6. Optional surface modification (step f)

The following optional "surface tailoring step" is used for modifying and adjusting surface properties of the nanocarbon formed.

Prior to any measures for surface modification it must be considered to what extent nanocarbon grown on the carrier is susceptible to such modification. The chemistry of carbon is determined by the electronic structural anisotropy of the chemical bonding within the graphene layer. The sp² configuration leads to planar objects with low chemical reactivity on the base or planes and with high chemical reactivity at the prismatic edge. Distortions of the planar arrangement of the graphene electronic systems may occur due to the strong electronic interaction of some oxygen atom bondings (e.g. quinone structures) or defects (five-membered rings) formed during synthesis. The ratio of terminating basal to prismatic faces determines thus the overall chemistry of a nanocarbon object. Defect-free carbon nanotubes (CNT) are difficult to functionalize whereas graphite nanofibers may expose a maximum of prismatic surface areas and hence be highly reactive. Onion-like spherical nanocarbon or V-shaped CNF are geometries that allow the adjustment of the ratio of surface terminations by changing the diameter of the onion or the V-angle between the graphene planes.

If no specific measures are taken prior to exposure to air, the still unsaturated prismatic edges of graphene layers will combine with oxygen from the air under formation of (acidic) hydroxyl groups at higher temperatures (preferably T1, e.g. 200°C) or (basic) quinoidic or pyrone structures at or close to RT. Such nanocarbon structures and the corresponding composites will show slightly hydrophilic properties.

The formation of hydroxyl group also results if hydrogen is switched off at the end temperature (T2) of the passivation step (e.g. at 400°C) and then cooled down to room temperature in air at a controlled rate of preferably 5 to 15 K/min.

However, the nanocarbon can also provided with hydrophobic properties if during the cooling step from T2 to T1 and/or T1 to RT, preferably only during the latter cooling step, the gas atmosphere is substituted with a hydrogen-containing feed using similar cooling rates as given above for air. Depending on the surface properties to be achieved and functional groups to be included, any other suitable feed gas can be employed to generate for instance at least one functional group selected from carboxylate, lactones, alcohol groups, ammonium, pyridinium, halides, cyanides, thionyl, fluoride and organosilyl.

Examples for suitable feed gases typically used in the surface tailoring step are dry and wet oxygen, nitrogen oxides for preferentially acidic surface groups, ozone for high density of oxygen functional groups and ammonia for all kinds of nitrogen-bearing functional groups. Nitric oxide gas applied for instance at 300 K (27°C) is particularly active in creating nitrate surface groups. Immersion into water or hydrogen peroxide or ammonium hydroxide or pyridine solutions are alternative methods. Chlorination or bromination is possible by exposure of the samples to the vapours of the corresponding HCl or HBr vapours. The halogen elements create strong surface halogenation much beyond the abundance of surface defects (act as oxidants).

It is not necessary to conduct the entire cooling process from T1 to room temperature in this feed gas. The cooling process may be terminated around 60°C and the carbon-carbon composite then exposed to air, which at these temperatures no longer causes any chemical alteration of the material.

Suitable reaction conditions for surface modification are also described in "R. Schlögl, Surface Composition and Structure of Active Carbons, in F. Schüth et al. (ed.), Handbook of porous solids, Wiley VCH, Weinheim, 2002, 1863-1900 and "K. Balasubramanian and M. Burghard, Chemically Functionalised Carbon Nanotubes in Small, 1, No. 2, 180-192, Wiley VCH, Weinheim".

### 2.2. Alternative manufacture process with two different types of catalysts

In accordance with the invention it is however equally possible to split up the catalyst functions and allocate them to different catalyst materials (catalyst material containing a "first" and "second" metal), the first one being capable of catalysing the oxidation of carbon and the second one being capable of catalysing the formation of nanosize carbon structures.

The resulting process utilizes preferably a porous carrier and then comprises the steps of
a') impregnating the porous carbonaceous carrier material with a catalyst material containing a first metal being at least capable of catalyzing the oxidation of carbon,
b') calcining the impregnated porous carbonaceous carrier material under oxidative conditions, for instance to modify the pore structure of said carrier,
c') impregnating the carbonaceous carrier material with a catalyst material containing a second metal being at least capable of catalysing the formation of nanosize carbon structures, calcining the impregnated catalyst material, and optionally fixating the catalyst,
d') reducing (and preferably activating) this second catalyst material, and
e') growing nanosize carbon structures on the carrier in a gas atmosphere comprising a carbon-containing gas by means of a CVD method.

The first step (a') can be performed under the same conditions as described under item 2.1.1., with the sole difference that transition metals which, in their oxidized form, are solely capable of catalysing the oxidation of carbonbut, after reduction, show little or no activity regarding nanocarbon growth can also be used. Representative examples for these catalyst materials are Mo, Nb or V which can be impregnated in the same manner as described above under use of suitable aqueous solutions.

The calcination (step b') then proceeds under the same conditions as explained above for step (b) under item 2.1.2.

Step (c') implements the conditions of step (c) under item 2.1.3., except for using a catalyst material containing a second metal. This second catalyst material is not restricted to the aforementioned bi-functional metal types, such as Fe, Ni or Co, but can be based on other transition metals such as Pd or Pt that are solely capable of enhancing nanocarbon growth while showing little or no activity in catalysing the oxidation of carbon. It should be added that it is not necessary, but possible to remove residues of the first metal catalyst material prior to impregnation with the second metal catalyst material.

Steps (d'), (e') and (f') then can be again conducted under the conditions disclosed under item 2.1.4, 2.1.5 and 2.1.6., respectively.

### 2.3. Process using CVD catalyst deposition

According to an alternative embodiment, catalyst treatment is achieved by chemical vapor deposition of a suitable gaseous compound, or a mixture thereof containing the catalyst metal(s). This technique is similarly useful for macroscopic, mesoscopic and nanoscopic carrier materials. For the latter type of materials, it is preferred over the previously explained impregnation techniques.

Suitable catalysts are the same as aforementioned and include iron (Fe), nickel (Ni) and cobalt (Co), mixtures of iron with alloy-forming transition metals or cerium (Ce), Pd and Pt, iron, cobalt and nickel being preferred.

The metal-containing starting material is selected such that it decomposes to the catalyst metal(s) and volatile products under reaction (CVD) conditions. Suitable compounds include, but are not limited to carbonyl compounds of the catalyst metals, such as Co, Fe or Ni carbonyl compounds, e.g. Fe(CO)₅ or Ni(CO)₄.

These may be used as commercially available or produced *in situ,* for instance from suitable precursor salts such as formates. The precursor salt is preferably diluted by inert solid carrier materials, such as BN prior to use to prevent its aggregation at higher temperatures. According to a preferred embodiment, the catalyst treatment step is conducted in a gas mixture of inert gas such as nitrogen or helium, and CO, in preferred volume ratios 99,9/0,1 to 50/50, in particular 99/1 to 90/10. The CO content is capable of converting metal residues of the precursor salt, which may remain after its conversion, to the corresponding metal carbonyl compound thereby increasing the efficiency of the method. Moreover, the same gas mixture can also be used in the following nanocarbon growth step.

If the metal-containing starting material, or its precursor for *in situ* formation, is arranged upstream of the flowing gas mixtures, a uniform and controlled deposition of catalyst metal on the carbonaceous carrier can be achieved.

Suitable and preferred deposition temperatures strongly depend on the type of metal compound used and the applied pressure, if any, and can be easily determined by a skilled person. Fe(CO)₅, for instance, can be utilized to deposit iron particles at 1000 to 1100°C and high pressure. Normal pressure and temperatures at about 300°C are sufficient to cause metal deposition from Ni(CO)₄.

Similarly, the deposition time can vary strongly, for instance from 30 min to 6 h, e.g. 2h to 4h. Preferred flow rates are 50 to 150 ml/min while the heating to and from the metal deposition temperature is preferably conducted with 1 to 10 K/min.

Nanocarbon growth can then be conducted under the same or similar conditions as described for step (e) under item 2.1.5, optionally followed by surface modification techniques as explained under item 2.1.6. According to one embodiment of this process variant, tubular fixed bed reactors can be used.

### 3. Applications

The full control over the location of the growth of nanocarbons on the host structure allows addressing families of applications with different functions of the nanocarbons.

Applications in which the carbon is permanently bonded as strengthening filler into a polymer matrix are best catered for by compact and mechanically strong host structures that are externally overgrown with nanocarbons. These nanocarbons must adhere firmly to the support which is enhanced in a fixation treatment step during catalyst preparation. The tailored surface properties plus the highly corrugated interface between carbon and polymer will lead to a very strong interaction over a large internal surface area. This gives rise to high mechanical strength and to a strong enhancement of the thermal conductivity. If the carbon filler content is above the percolation limit (contact of carbon particles with each other) then also a strong increase in the electrical conductivity is achieved.

Applications in which the composite is used to adsorb selectively ionic or neutral species from a fluid or gaseous matrix are realised very effectively if the nanocarbons coating is nested into the voidage of the AC host. Here the host gives mechanical strength of the very high active surface and provides a transport system allowing tuning the time of residence of the matrix at the active surface to optimise the filtering effect of the nanocarbon coating. The micromorphology indicates the bio-mimetic adaptation of plant families submerged in water where they filter foodstuff from the surrounding matrix.

According to the present invention, the surface properties of the nanocarbons can be tailored to the intended application at the atomic level. An exact control over the interaction of the nanocarbon with its environment is exerted in this way giving the product much of its beneficial role. The chemical binding strength and the specificity of interaction between carbon and constituents of surrounding matrices are determined. There is a wide selection of known methods to functionalize the carbon surface.

Table 1 reports possible combinations of surface properties that can be achieved by surface modification of as-synthesized nanocarbons. It is important to note that these surface properties can only be applied to prismatic terminations of graphene units or to structural defects within a graphene sheet. The basal plane of the graphene sheet is chemically inert and a polar in its sorption characteristics.

**Table 1: Surface properties of nanocarbon products.**

| **Sorption behaviour** | **Proton affinity** | **Bonding** | **Functional group** |
|---|---|---|---|
| hydrophilic | acidic | anionic | carboxylate* |
| | neutral | anionic | lactones, alcohol |
| | basic | anionic | quinoidic, pyrones* |
| | basic | cationic | ammonium |
| | basic | cationic | pyridinium |
| | neutral | covalent | halides |
| | neutral | covalent | cyanides |
| | neutral | covalent | thionyl |
| hydrophobic | - - - | polar | fluoride |
| | - - - | polar | organosilyl |
| | - - - | non-polar | proton |

| | | | |
|---|---|---|---|
| * Standard surface terminations after synthesis and exposure to air at RT | | | |

The specificity of surface chemical tailoring is increased further if the functional groups denoted in the Table are used to bind covalently lager organic molecules to the surface. Diels-Alder chemistry, C-C halide coupling chemistry and amino acid formation with nanocarbons as macro-ligands are possibilities leading to highly specific functions in possible biomedical and sensor applications.

A large number of applications can be identified for the carbon-carbon composite materials of the present inventions. They involve, but are not limited to the use as catalyst, as tire filler materials or filler for reinforced plastics in the car and plastics industry, the use for device packaging in the electronic industry, the use for purifying drinking water or clean-up of industrial water, the use in the mining industries for enriching or depleting specific metal species (e.g. Au), the magnetic collection of spillage adsorbants (oil, chemical etc.), the use as bioconcrete or in dialysis in the medical industry or the use in supercapacitors or battery electrodes.

In more detail, these applications can be described as follows.

### 3.1. Fillers

Many functional polymers are filled with carbon to modify their basic properties. Examples range from car tyres over re-enforced plastic car bodies to all cases of electronic devices, squash rackets, aeroplane parts or rocket engines. Carbon is present as soot (tyres) or as fibers (the macroscopic realisation of CNF). In most cases it is the greatly improved thermal stability of the composite that is the core advantage. Mechanical re-enforcement is always active when carbon fibers are applied but their effect would be much improved if the binder-filler interface would be more durable and larger. Filling with soot also affects the elastic properties greatly as the agglomerates of basic structural units interfere with the motion dynamics of the polymer strands in the material.

The poor contact between basic structural unit agglomerates, their enigmatic control of geometry and the limited possibility of tailoring the surface chemistry of soot are major disadvantages of the current technology. The market need for a solution let already to favourably test experiments with CNT mixtures. In applications of carbon fibers it is the macroscopic size that limits favourable elastic properties and greatly limits the forming of such parts (no strong curvatures, no small parts or details). Also the surface chemistry and the binder-filler interface are not sufficiently defined and should be much larger. Complex auxiliary technologies are needed to pre-activate the carbon fibers.

The carbon-carbon composites of the invention offer advantages as their binder filler interface is orders of magnitude larger due to the reduction in size of the filler elements and their dimensions fit well with the critical dimensions of polymer strands in the binder. The shape and size of the strong CNT "hairs" covering the support allows for a good nanomechanical entanglement and interaction. In addition, a mechanically strong carbon skeleton is brought into the system. The binding between the filler and the matrix can be achieved through chemical anchoring at the nanocarbon surface. In addition, the three-dimensional mesopore system introduced into the hard carbon can be penetrated by polymer chains and in this way a second dimension of nanomechanical bonding will be achieved between the porous carbon and the polymer.

In the car tyre application it is of particular importance to create anchoring points for the rubber polymer requiring ideally heteroatomic functional groups with nitrogen and sulphur. These groups are hard to anchor on conventional soot. The herringbone type CNF offers the advantage of forming internally and external strong linkages with nitrogen functions and may also carry a significant amount of stable R-SH groups due to the extensive exposure of prismatic faces with a significant "nano-roughness" (see also Figure 1f).

In many applications the thermal conductivity is also of major concern. In tyre applications the local overheating of the rolling surface temporarily softens the surface and leads to abrasion. The relevance of thermal stability in aerospace applications where large temperature gradients are experienced throughout operation is obvious. Even in structural applications of plastic for car bodies the softening due to simultaneous temporal thermal and mechanical stress (drive in summer at high speed) is of critical concern and can lead to de-lamination and fatigue failures.

All these shortcomings of conventional technology are greatly improved with the claimed composites allowing for strong and multiple contacts between the filler elements and to the matrix. The fact that anisotropic improvement is reached may be an additional advantage as the composite particles will hardly give rise to texturing during composite manufacture. An application where this feature is of high attraction is the manufacture of device packages where a maximum thermal conductivity is wanted with respect to the functional integration in the microelectronic component.

Table 2 summarizes for specific application properties the advantages of the claimed composites.

**Table 2**

| **Specific application** | **Critical property** |
|---|---|
| device packaging in electronics | thermal conductivity |
| | isotropic thermal conductivity |
| car tyres | thermal conductivity |
| | modulation of elasticity |
| | addition of hard filler |
| | stable and reproducible interface |
| re-enforced structural polymers | stable and reproducible interface chemistry |
| | mechanical strength |
| | thermal/electrical conductance |
| | high-strength small parts * |
| | mechanical stability at high curvature shapes |

| | |
|---|---|
| * with µ-sized AC carrier particles | |

In accordance with the present invention, it has been found that the already mentioned shortcomings of conventional filler (percolation limit up to 50 wt.%) can be avoided. The macro-, meso-, micro or nano-sized carbon support breaks the linear anisotropy in part and prevents thereby the agglomeration to bundles. The fact that one support particle carries many nanocarbons like tentacles of an octopus makes these supports into nodes of an automatically forming 3-dimensional network. Both factors and the additional intrinsic mechanical strength plus thermal/electrical conductivity reduce the filling needed for percolation to a small fraction of conventional carbon fillers. Depending on the length of the nanocarbon elements that can be tailored to modify strength (short) or elasticity (long) of the network, percolation limits as low as 5 to 10 wt% can be reached with the present invention.

If, as achievable with the present invention, the percolation limit is low with respect of the amount of filler to be tolerated in the composite, heat and electrical conductivity can be significantly enhanced over present materials. The carbon black-nanocarbon (CNT/CNF) composites of the present invention thus provide fillers with much higher specific conductivity.

### 3.2. Adsorbants

This application is most natural for carbon, which is today a major material in many adsorption technologies. Despite this fact and the enormous body of academic and industrial development there is still one major shortcoming of activated carbon that is directly addressed by the present invention. The active surface in carbon is created in a very hard-to-control process that is highly correlated between pore structure and surface tailoring. As consequence, the distribution of these two key properties regulating transport and bonding strength is very wide and a number of unwanted processes limits the effectiveness of activated carbons in sorption processes. The insufficient control of properties becomes severe when the abundance of the species to-be-removed from a matrix is small (highly toxic species) and when the sorption properties between matrix constituents and the species to-be-removed become similar. An extreme sample is the dialysis of blood where trace amounts of toxic molecules have to be selectively adsorbed in an extremely complex matrix.

The present invention addresses both shortcomings of conventional activated carbon and allow the independent optimisation of transport properties and the local surface chemical tailoring. This decoupling of optimisation is an invaluable advantage and forms the basis of all application scenarios in adsorption.

The pore-opening process of the AC support controls the transport properties for the fluid matrix. The methods of the invention give full control over the ratio between macro-and mesoporosity allowing hence designing the transport of fluid phases within the host structure. The fine-tuning of the residence of the matrix at the nanostructured carbon filaments is achieved by regulating their density at the support surface. The good mechanical stability of the scaffolding AC host structure allows for a stable flow pattern of the fluid over the nanostructured surface even when a particulate loading is slowly accumulating that would gradually block the micropore system of a conventional activated carbon and hence vary the flow kinetics.

The design work is independent from the surface tailoring chemistry being performed at a different stage of the synthesis. All possibilities given in Table 1 can be combined with the optimised flow geometry that is in most cases a nested form of nanocarbon. In this way, long-term stable and potentially re-useable adsorption systems based on carbon chemistry can be realized.

Specific applications and benefits of the claimed produces are listed in Table 3.

**Table 3: Profile for the focus application "Adsorption"**

| **Specific Application** | **Critical property** | **Advantage through application of the present invention** |
|---|---|---|
| Drinking water | Selective adsorption of toxic ions: e.g. Fe, Hg, As, Cr | Controlled flow pattern tailored sorption sites, stable macrostructure, re-useable |
| | Selective adsorption of polar and non-polar molecules: oil spill, pharmaceuticals | High density of specific adsorption sites, no accessibility problem in micropores |
| Industrial water | Specific adsorption of dyestuff | High density of specific adsorption sites, no accessibility problem in micropores |
| | Specific adsorption of toxic anions: chromate, cyanide | High density of cationic sorption cites, stability |
| | Ultrafiltration of colloidal particles and organisms | Stable flow pattern and filtration kinetics during loading, re-usability |
| Environmental Clean-up | Collection of spillage adsorbent: oil spill | Magnetic DNC |
| Mining | Specific enrichment of ionic Au | High density of specific sites: cyanide modified surface |

### 3.3. Application scenarios in water purification

The application area or preparation of different qualities of water using nanocarbons is a preferred target of the present invention. This is motivated by the traditional strong position of carbon products, the great demand for improved technological solutions and by the general relevance of water as biological and technical resource. The applications listed can occur in all branches of water treatment including
o Waste water purification
o Drinking water preparation
o Utility water generation
o Ultra-high purity water production

### 3.3.1. Adsorption of critical ions

The abundance of Fe and Mn in many natural water resources is so high that chemisorption of these molecules at the active surface would quickly exhaust the capacity of a carbon filter bed. In addition, these metal species tend to block other filter systems used for e.g. biological clearing by polymerising in the pore system of the often very valuable non-carbon filter materials shortening their lifetime in an unacceptable way. This prevents the application of such purification and leaves the water in a biologically active state with severe consequences for the consumers.

Conceptually, it is difficult with present activated carbons to filter metal ions with a net negative charge as functional groups on carbon are frequently acidic and then can only adsorb positively charged species. Metals being present in mono- or oligoanionic forms (e.g. ferrates, chromate, manganate, arsenate, molybdate, vanadate) are difficult to remove by carbon adsorption based on acid-base reactions due to the lack of activated carbon in basic functional groups even though some anions (e.g. chromate) may also be bound covalently by buffering type reactions. Nanocarbon can be made highly basic and supports the adsorption of large polarizeable species further by strong van-der Waals forces from the graphene patches of suitably tailored nanocarbon surfaces. If they are made as entangled felt and are equipped with supramolecular roughness through twinning or bundling, then heterogeneous nucleation sites for local precipitation of the adsorbed species through condensation will strongly enhance the adsorption capacity.

Ionic species such as Hg, Cr, Sb, As from natural or man-made activities (agriculture, mining, metal processing, land fills) contaminate water sources and render them highly toxic or unusable in areas where there is little natural clean water available. Their filtration is also dependent on the action of basic adsorption sites non-frequent on current AC. Even if much of this metal content can be removed by bulk chemical methods of precipitation and flocculation there is a high demand for additional filtering techniques in difficult cases, in applications of smaller scale or for the production of high quality water for biological or technical applications (semiconductor industry, mineral water industry).

The preferred composites based on porous carbonaceous carriers, as obtained by the processes comprising steps (a) to (e) or (a') to (e') are moreover able to bind specifically more than one single metal ion at a given selective adsorption site. This can be achieved by using the natural tendency of amphoteric metal ions (e.g. Mo, V, W) to form oxopolymers if they are sufficiently concentrated. In many cases these ions form already in the water matrix the corresponding polyanions (e.g. polymolybdate, polyvanadate, polytungstate) and cannot be chemisorbed by cationic ion exchange in the adsorption mechanism of standard activated carbon.

It is the combination of basic functional groups and of strong Van-der-Waals attraction that selectively binds large anions to the surface of the nanocarbon. Both surface characteristics are very difficult to achieve with standard carbon that is acidic in proton reactivity and semiconducting in its electronic structure. These properties arise from the oxidation reactions used for the manufacture of the pore system of activated carbon and can only partly be overcome by very expensive high temperature treatments.

To achieve a concentration effect of anionic condensable metal species (such as Fe, As, Mo, W etc.), it is in accordance with the present invention preferred, to force the dilute water matrix to reside sufficiently long near a surface offering chemisorption sites for these metals in order to allow attachment to the surface and to each other under the directing influence of the functionalised surface. It is believed that an irreversible double-layer polycondensation "olation" reaction occurs driven by the energy gain of forming strong metal oxygen-metal bonds from previously hydrated monomeric precursors. The olation reaction of macroanions thus enhances the adsorption capacity for these difficult-to-collect species.

The regeneration of such a multifunctional ad-absorption material after full loading is possible by leaching the metal-oxo-polymer in a suitable medium giving rise to a concentrated metal salt solution as can be post-processed by bulk chemical techniques.

If one wishes to adsorb cationic species that are bound by conventional ion-exchange mechanisms, then a suitable surface functionalisation can be applied to the nanocarbon material. The standard surface termination with few basic oxygen groups is not suitable for such applications. Correspondingly, acidic groups must be incorporated for instance by treatment with oxygen, nitric oxide, nitrous oxide or ozone. Moreover, a liquid activation in a pre-treatment with aqueous hydrogen peroxide (e.g. 3% in water) prior to adsorption usage will greatly enhance the cation adsorption capacity of the material.

Monoanionic species such as (di)chromate, manganate, ferrate or arsenate can also be bound by ion exchange mechanism based on basic groups, such as pyrone, or quinoidic, ammonium or pyridinium groups.

### 3.3.2. Filtration of large molecules

Hydrophobic molecules in small concentrations such as polycyclic aromatics, pharmaceuticals, dyestuffs, herbicides, oil spills etc. will not easily adsorb on hydrophilic activated carbon surfaces. Multiwall nanotubes can be made such as to expose a very high specific surface area with graphene termination being a perfect substrate for chemisorptions of a polar or aromatic molecules. Their synthesis can be carried out such as to terminate all defects with hydrogen atoms and hence to provide a highly hydrophobic surface. Such structures need a carrier to be accessible in a polar matrix such as water. This polar container is formed by the support activated carbon allowing creating a two-phase situation of well dispersed polar carbon carrying hydrophobic surfaces for effective adsorption of traces of large molecules.

### 3.3.3. Oxidative water treatment

Carbon is an excellent catalyst for decomposing strong oxidants such as peroxide or ozone into reactive species. The oxidation of organic species of molecular or biological original (TOC) which is currently being carried out by homogenous reaction with the oxidant will be greatly enhanced in effectiveness if a catalyst serving as activator for the oxidant and as a storage medium for the active species is present. In addition, the carbon will eventually destroy all surplus oxidant by converting it into molecular oxygen if the activated form finds no organic species to react with. This enhances the safety of oxidation systems preventing oxidant from occurring downstream of the treatment unit. Besides biological organic matter, pesticides, herbicides and residues of pharmaceuticals in applications with multiple regeneration of surface water are targets for such applications. Also transportable water treatment units are applications as their easy handling and safety of operation are critical factors.

In the reactive applications it is mandatory to control the surface reactivity of the carbon catalyst. The composite materials of the present invention are well suited as one variety of nanocarbons can be generated where large fractions of graphitic surfaces are combined with a small number of hydroxyl groups. Such surfaces effectively decompose the oxidant at the hydroxyl sites and store the activated oxidant on the metallic graphite surface providing oxygen atoms in *statu nascendi.* In order to direct the organic species to the surface it is further desirable to give the carbon an overall hydrophobic character which also enhances the lifetime of the activated oxygen. Finally, it is essential that few defects are present at the surface to avoid auto-oxidation of the catalyst, a major drawback in conventional activated carbon materials.

### 4. Examples

If not stated otherwise in the specification and the following examples, the analytical techniques employed were conducted under the following conditions.

SEM investigation is performed on a Hitachi S-4000 FEG in secondary electron (SE) mode and backscattered electron (BSE) mode at 15 KV accelerating voltage.

TEM study is performed on a Philips CEM 2000 LAB6 operating at 200 KV.

The BET surface area was measured by physisorption of nitrogen at 77K with an Autosorb-1 automated volumetric measuring device (available from Quantachrome). From these data the BET surface area, the pore volume and its size distribution according to the BJH formalism were derived using the data for adsorption and desorption isotherms measured at high resolution in the p/po parameter (p= pressure offered by device, po= saturated vapor pressure of nitrogen).

### Example 1

The activated carbon used as carrier was obtained from VERSATEC SDN (Malaysia). It was made from palm kernel shell, a waste product from palm production. It contains, besides carbon, substantial amounts (about 6 wt.-%) of silicate and traces of iron as iron silicate after the activation. The activation is done in a proprietary step by and comprises partial oxidation and steam treatments.

The activated carbon was crushed and sieved to achieved a homogenous particle size distribution with an average particle diameter of about 0,5 mm. A typical carbonised precursor obtained form palm kernel shell exhibits a BET surface area of about 1081 m²/g and a pore volume of 0,365 cm³/g.

A scanning electron micrograph (SEM) of the as-obtained activated carbon is displayed in **figure 1a.**

To prepare the host for the designed hierarchical structure, the as-obtained AC was mildly oxidized at 400°C in air for four hours. It is believed that this mild oxidation increases mesoporosity while retaining a high surface area. During this step, the activated carbon suffered a weight loss of about 5,2%. The specific BET surface area of the catalytically active Fe/AC carrier was 1490 m²/g and the pore volume increased to 0,551 cm³/g. **Figure 1b** shows a SEM image of activated carbon after the mild oxidation. Oxidation at this temperature removes also the small debris of carbon from the surface and cleans the pores of activated carbon. Furthermore, the oxidation enlarges the pore size as is apparent by comparison of the electron micrographs in **figure 1a and 1b.**

1,0 g of the resulting AC carrier were pre-wetted with water and treated with 2.0 ml of an aqueous 0,09 M solution of Fe(NO₃)₃ having a pH of 2,0. Impregnation was conducted under shaking at room temperature over a time period of 6h. The impregnation was followed by drying the impregnated AC carrier 12 h in static air at a temperature of 60°C. Under these conditions a loading of 1 wt.-%, in terms of iron (III) oxide based on the dry AC carrier was achieved.

The iron oxide-loaded AC carrier was subjected over four hours to mild oxidation at 500°C in flowing nitrogen containing 500 Vol-ppm (=0,05 Vol.-%) of oxygen.

Batches of these 1g lots were combined to give 20 g dry precursor material.

Ca. 2g of the resulting calcined iron oxide/AC carrier were reduced in a gas mixture of 20 vol.% H₂ in N₂. The carrier material was heated from room temperature to the final temperature of 430°C with a temperature rising rate of 5 K/min and held at this temperature over two hours. The flow rate was 100 ml/min per 5 g sample.

During the following activation step the reduced Fe/AC carrier material was cooled in helium from the reduction temperature to room temperature.

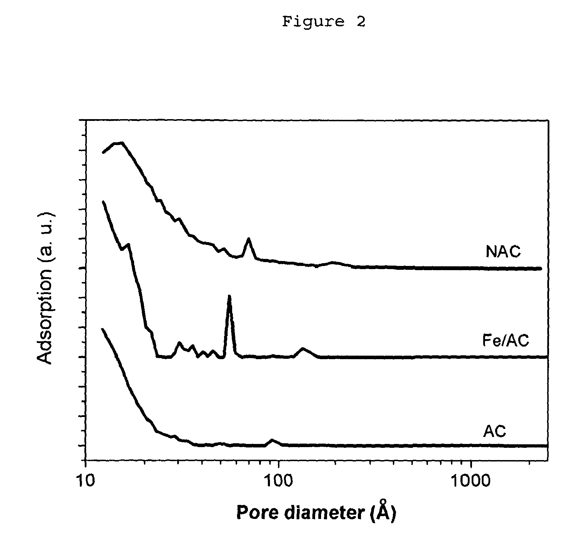

The SEM image in **figure 1c** shows the catalyst of iron particles observed on the surface of the AC catalyst after impregnation, oxidation and reduction referred to as "Fe/AC"). The plot of BJH pore size distribution in **figure 2** shows that the volume of mesopores in the Fe/AC carrier material obtained is substantially increased relative to the untreated AC material. In parallel to the formation of mesopores also the micropores were enlarged as seen from the structure in the BJH plot around 2 nm pore size (**figure 2**).

100 mg of Fe/AC carrier was put under He into a vertical quartz reactor and flushed using He overnight followed by reheating in He to the growth temperature with 10 K/min. After reaching the growth temperature (700°C), the He atmosphere was substituted first for hydrogen and then for flowing C₂H₄/H₂ (60/40 Vol.-%, 125 ml/min), and carbon nanofibers were grown at atmospheric pressure for two hours. The obtained sample was cooled down to room temperature in the flow of He.

The carbon-carbon-composite with carbon nanofibers covering the activated carbon is shown in **figure 1d.** These orient randomly and are entangled with each other. The diameters of the fibers are widely distributed from 20 to 300 nm. The cross-section SEM image in **figure 1e** confirms that the carbon nanofibers (CNF) are grown on the outer AC surface. The SEM image of the single CNF in **figure 1f** reveals the substantial surface roughness of the outer surface of the CNFs. Such a morphology is beneficial for the hydrodynamic of sorption processes from the liquid phase and provides mechanical and chemical anchoring sites when used as additive in polymer materials.

The yield of the carbon nanofiber on the Fe/AC host reached about 105 g of C per 100 g of Fe.

The growth mechanism was found to be the same as is well known for CVD preparation of CNT/CNF involving the dissolution, diffusion and precipitation of carbon atoms through the catalyst particle (J.C. Charlier, S. Iijima in Topics in Applied Physics, vol. 80 (eds. M.S. Dresslhaus, et al.) 55-80 (Springer, Berlin, 2001)).

**Figure 3a and 3b** present secondary electron (SE) and backscattered electron images (BSE) of carbon nanofibers on the activated carbon, respectively. From a comparison of the contrasts, the location of iron catalyst particles can be found as bright objects in the backscattered electron micrographs. Apparently, the CNF growth in the prepared composites follow the "tip-growing" model (C. Emmenegger, J.-M. Bonard, P. Mauron, P. Sudan, A. Leopora, B. Grobety, A. Zuttel, L. Schlapbach, Carbon 2003, 41, 539 and M. José-Yacamán, M. Miki-Yoshida, L. Rendón, J.G. Santiesteban, Applied Physics Letters 1993, 62, 657): Most of the iron catalyst particles are found on tips of the CNF (transmission electron micrograph (TEM) of **figure 3c**), although in few cases the iron particles are found not only at the tip but also in the middle of carbon nanofibers. The high-resolution TEM image (**figure 3d**) of the carbon nanofibers reveals that these are of herringbone type disclosing the origin of the surface roughness seen in SEM **(figure 1f).** With respect to the intended applications it was desired to expose as many prismatic faces as possible to the surface of the nanocarbon without losing mechanical stability to an undesired extent. The high loading and the details of the activation caused the catalyst particles to aggregate (see **figure 3c**), which favours CNF growth over CNT growth and enhances the formation of the wanted CNF rough surface.

**Figure 4a** presents a cross-section SEM image through the bulk of the obtained composite material with a large pore in it after CNF growth. Hair or microbush structures are found inside the pore (comparing with the SEM image of **figure 1b).** The enlarged SEM-image in **figure 4b** reveals that the dendritic structure is entangled CNF created during the CVD process. The cross-section TEM image of the pore shown in **figure 4c** proves convincingly that CNFs were grown on the inner wall of the pore. Moreover, the distribution of CNF diameters in the pores is quite narrow, in the range of 20 to 50 nm. In addition, the CNF grown inside the pores are shorter in length than those grown on the surface of the activated carbon. This may be due to limited transport of ethylene into the pores. The microstructure of CNF in the pores is revealed by high resolution TEM as shown in **figure 4d.** The microscopic data are confirmed by the specific BET surface area of the composite material obtained which decreases to 305 m²/g and thus is much smaller than that of AC or the Fe/AC system. The pore volume decreases to 0,289 cm³/g. This is attributed to the partial filling of the pores in the matrix by CNFs. The pore size distribution (**Figure 2**) changes drastically with a broad distribution of nanosize pores being attributed to the desired voids between the entangled CNF fibers.

The surface of the as-prepared CNF should be poor in acidic oxygen functional groups due to the reductive growth reaction atmosphere. Chemisorption by ion exchange with OH groups thus should not a frequent process. On the other hand, the nanostructured voids between the entangled CNF plus their rough surface are a suitable space for agglomeration of condensable species and thus allow the filtering of difficult-to-adsorb species. This is illustrated for oxoanions of transition metals in the following example.

### Example 2

In this example, the adsorption capacities towards HPA (heteropolymolybdate [PMo₁₂O₄₀]³⁻ and dichromate [Cr₂O₇]²⁻ of untreated AC, AC mildly oxidized at 400°C (referred to as "AC-400") and CNF/AC composite material (referred to as "NAC"), as described in example 1, respectively, were compared. 10 mg of each adsorption material were suspended in 1,5 ml HPA or dichromate solution. The starting concentration was 1 mM. The suspensions were agitated for one hour at room temperature. The concentration of [PMo] was measured by photometry at a selected wavelength of 325 nm. The adsorption test was performed in Eppendorf-Caps (vol. 2.0 ml, polyethylene material). No pH adjustment was carried out since the autogenous pH already resulted in dissolved HPA or chromate, respectively (for HPA solution around 3,0, for chromate around 8,5).

The results are shown in the following table 4.

**Table 4 Adsorption of dichromate or molybdate species in aqueous solution**

| | BET [m²g⁻¹] | Ads [Cr₂O₇]²- [µmol/g]^{a} | Ads (rel) [Cr₂O₇]²- [µmol m⁻²] | Ads [PMo]^{c} [µmol/g] | Ads (rel) [PMo] [µmol m⁻² |
|---|---|---|---|---|---|
| AC-400 | 1490 | 67 | 0.016^{b} | 15.5 | 0.120 |
| AC | 1081 | 73 | 0.034^{b} | 2.50 | 0.024 |
| NAC | 305 | 55 | -d | 16.6 | 0.660 |
| Blank | - | 55 | - | 0^{e} | - |

| | | | | | |
|---|---|---|---|---|---|
| ^{a} estimated ^{b} values are based on difference to blank ^{c} [PMo] is H₃[Pmo₁₂O₄₀] ^{d} Concentration after experiment identical with blank ^{e} in all solutions (325 nm) enhanced after experiment; adsorption of [PMo] for blank is taken as zero mark | | | | | |

The activated carbon (AC) adsorbed dichromate via ion exchange of acidic surface hydroxyl groups (buffering type reaction with oxygen atom of hydroxy). With treatment and with growth of the CNF these surface hydroxyl groups are removed to a great extent thereby reducing the adsorption function of the material. On the other hand, the macroanionic polyoxomolybdate is poorly anchored on hydroxyl groups due to its unfavourable charge-to-surface ratio. Sites for polycondensation of this anion into oxy-hydroxide polymers were created in example 1 by changing the surface texture of the AC and by introducing the CNF filling into the pore system. In the above table, the abundance of the adsorbed heteropolymolybdate in µmol m⁻² increases by a factor of 5 if activated carbon is mildly oxidised at 400°C (AC-400), but by a factor of 27 after the growing of CNFs on and inside the AC (NAC).

Therefore, the present invention allows the removal of metal species from drinking water such as condensable heteropoly acids that cannot be adsorbed with conventional AC materials.

### Example 3: Synthesis of CNT on carbon black (nanoscopic carrier)

10,0 g of commercial carbon black (DEGUSSA PRINTEX 40) was suspended in 200 ml conc. ammonium hydroxide solution and agitated in an ultrasound bath (600 W with water as transmitting agent) at 300 K (27°C) for 30 min. The resulting colloidal suspension was separated from the liquid phase by centrifugation and the wet solid is placed in a vertical tubular quartz reactor of 25 mm (internal diameter) fitted in a tubular furnace of 100 cm length. Under the carbon black packing a packing of 0,2g Ni-formate diluted in 1 g of boron nitride was placed.

The reactor was flushed with nitrogen and then a reactive gas atmosphere of 5% CO in nitrogen at a flow rate of 100 ml/min was fed. The reactor was heated to 573 K (300°C) with 5K/min and held at that temperature for 3 h then heated to 823 K (550°C) with 5 K/min and held at this temperature for 3 h. The gas was replaced by pure nitrogen and the reactor is cooled with 5K/min to 623 K in nitrogen. Then 5% CO in nitrogen was added for 20 min at that temperature. Cooling to ambient temperature was conducted in pure nitrogen without a temperature program.

The resulting fluffy powder is suitable as re-enforcement filler in polymers, e.g. rubber for tyre applications. TEM and SEM analysis confirmed that individual nanoscopic carbon black particles (diameter about 150 to 600 nm) were symmetrically surrounded by CNTs (diameter about 20 to 40 nm).

### Example 4: Synthesis of immobilized carbon nanofibers CNF on mesoscopic AC carrier

25 g of activated carbon (VERSATEC, Malysia) was comminuted, sieved and subjected to flotation to achieve a grain size of below 50 µm whilst very fine fractions were separated. The classified material was divided in 1 g portions which, after pre-wetting with water, were each impregnated by means of the "incipient wetness technique" with 0.09 molar Ni nitrate solution at a pH of 4,0 to achieve a loading of about 1 wt.% in terms of Fe₂O₃. This required a total liquid volume of 2,0 ml of Ni nitrate solution to be dosed by a dosing robot (CHEMSPEED).

The resulting solids were combined and transferred in a universal thermal processor furnace (gas-tight furnace of oscillating drum-type) with separate gas feeds for nitrogen, oxygen, hydrogen and ethylene. A total gas flow of 125 ml/min was maintained at all times of processing using nitrogen as base carrier gas. All temperature variations were done with 5K/min. After flushing (with nitrogen) for 30 min the sample was heated in nitrogen containing 5 Vol.% oxygen to 523 K (250°C) and held at this temperature for 2 h to convert the catalyst into its oxide form. After flushing (with nitrogen) the gas was replaced by 5% hydrogen in nitrogen and the temperature was raised to 623 K (350°C) and held for 2 h to obtain metal catalyst particles. Then the gas was changed to pure hydrogen and the temperature was raised to 923 K (650°C). After 10 min at that temperature a mixture of 100 ml/min hydrogen and 25 ml/min ethylene was applied for 3 h. Under these conditions nanocarbon grew on the outer surface of the support carbon. Then the gas was changed to 5% hydrogen in nitrogen and the temperature lowered to 673 K (400°C). Then a mixture of 5% ethylene in nitrogen was applied and the product cooled to 473 K (200°C). This procedure passivated the catalysts. Then the gas was changed to pure nitrogen and the product cooled to room temperature.

Exposure of the product to air caused the spontaneous formation of basic hydroxyl groups.

The resulting material is a suitable filler for rubber used in car tyres, and bearings for high load objects (e.g. earthquake absorbers, bridge bearings).

## Claims

1. Carbon-carbon composite material comprising a carbonaceous carrier and nanosize carbon structures, wherein the nanosize carbon structures are grown on the carbonaceous carrier.

2. Carbon-carbon composite material according to claim 1, wherein the carbonaceous carrier is porous.

3. Carbon-carbon composite material according to claim 1, wherein the carbonaceous carrier is activated carbon.

4. Carbon-carbon composite material according to any of claims 1 to 3 wherein the activated carbon is activated carbon obtainable from vegetable sources containing silicate, such as palm kernel shells.

5. Carbon-carbon composite material according to claim 1 wherein the carrier is an activated carbon particle having a diameter of 10 to 500nm.

6. Carbon-carbon composite material according to any of claims 1 to 5 wherein the nanosize carbon structures are selected from carbon nanofibers (CNF) and carbon nanotubes (CNT).

7. Carbon-carbon composite material according to claim 2 or 3, wherein the nanosize carbon structures are nested in the pores of the porous carbonaceous carrier and/or are located on the outer surface thereof.

8. Process for the manufacture of a carbon-carbon-composite material as defined in claim 1 comprising the steps of
treating a carbonaceous carrier material with a metal-containing catalyst material, said metal being capable of forming nanosize carbon structures, and
growing nanosize carbon structures by means of a CVD (chemical vapour deposition) method on the treated carrier in a gas atmosphere comprising a carbon-containing gas.

9. Process according to claim 8 wherein the carrier is porous and the process comprises the steps of
a) impregnating the porous carbonaceous carrier material with a metal-containing catalyst material, said metal being capable of catalysing the oxidation of carbon and the formation of nanosize carbon structures,
b) calcining the impregnated porous carbonaceous carrier material under oxidative conditions,
c) optionally newly impregnating the carrier obtained with said catalyst material and calcining the newly impregnated carrier material under oxidative conditions,
d) reducing the catalyst material, and
e) growing nanosize carbon structures on the carrier in a gas atmosphere comprising a carbon-containing gas by means of a CVD method.

10. Process according to claim 8 wherein the carrier is porous and the process comprises the steps of
a') impregnating the porous carbonaceous carrier material with a catalyst material containing a first metal being at least capable of catalyzing the oxidation of carbon,
b') calcining the impregnated porous carbonaceous carrier material under oxidative conditions,
c') impregnating the carbonaceous carrier material with a catalyst material containing a second metal being at least capable of catalysing the formation of nanosize carbon structures and calcining the impregnated catalyst material under oxidative conditions,
d') reducing this second catalyst material,
e') growing nanosize carbon structures on the carrier in a gas atmosphere comprising a carbon-containing gas by means of a CVD method.

11. Process according to claim 9 or 10 wherein the impregnation step(s) is (are) conducted after pre-wetting the carrier material.

12. Process according to any of claims 8 to 10 wherein, prior to growing nanosize carbon structures, the metal catalyst is immobilized by generating recesses on the carbon surface, in particular between steps d) and e) as defined in claim 9 or steps d') and e') as defined in claim 10.

13. Process according to claim 8 wherein the carbonaceous carrier, preferably carbon black is treated by depositing metal catalyst on the carrier by means of a CVD process in the presence of a gaseous compound containing the catalyst metal.
